# EUROPÄISCHE PATENTSCHRIFT

(11) **EP 3 954 635 B1**
(45) Veröffentlichungstag und Bekanntmachung des Hinweises auf die Patenterteilung: **24.04.2024**
(21) Anmeldenummer: 20191504.8
(22) Anmeldetag: 18.08.2020
(51) Int. Cl.: B65G 57/03, B65G 57/112, B65G 57/22

(54) **VORRICHTUNG ZUR AUTOMATISIERTEN BELADUNG EINES LADUNGSTRÄGERS MIT EINEN LADESTAPEL BILDENDEN LADEEINHEITEN UND VERFAHREN DAZU**
DEVICE FOR AUTOMATICALLY LOADING A LOAD CARRIER WITH LOADING UNITS FORMING A LOAD STACK AND METHOD FOR SAME
DISPOSITIF DE CHARGEMENT AUTOMATISÉ D'UN PORTEUR DE CHARGE DOTÉ D'UNITÉS DE CHARGEMENT FORMANT UN EMPILEMENT DE CHARGEMENT ET PROCÉDÉ CORRESPONDANT

(30) Priorität: 11.08.2020 DE 102020121097
(43) Veröffentlichungstag der Anmeldung: 16.02.2022
(73) Patentinhaber: Stöcklin Logistik AG, 4242 Laufen (CH)
(72) Erfinder: BEGERT, Urs, 2563 Ipsach (CH)
(74) Vertreter: Söllner, Udo

(56) Entgegenhaltungen:
- EP-A1- 2 592 027
- EP-A1- 3 072 837
- WO-A1-2009/094681
- DE-A1- 19 720 650

## Beschreibung

Die Erfindung betrifft eine Vorrichtung zur automatisierten Beladung eines Ladungsträgers mit einen Ladestapel bildenden Ladeeinheiten, wobei die Vorrichtung ein den Ladungsträger in mindestens eine ebene Richtung und eine Hochachsrichtung dazu beförderndes Fördermittel aufweist und die Vorrichtung eine Positionierfördereinrichtung mit mindestens zwei die Ladeeinheit in Richtung zum Ladungsträger fördernden Förderbändern aufweist, welche relativ zum Ladungsträger in Längsrichtung und in Querrichtung verfahrbar sind und die Vorrichtung einen die Ladeeinheit auf die Positionierfördereinrichtung befördernden Übergabeförderer aufweist, nach dem Oberbegriff des Anspruchs 1.

Bei den Ladeeinheiten kann es sich um Einheiten handeln, die bei der Kommissionierung von Produkten für den Einzelhandel oder Filialbetrieben benötigt werden. Dabei wird aus einer Vielzahl von unterschiedlichen Produkten eine für den jeweiligen Betrieb benötigte Filialpalette zusammengestellt.

Diese Einheiten oder Ladeeinheiten werden auf einem Ladungsträger in der Form beispielsweise einer Palette zusammengestellt, wobei die Einheiten auf der Palette zu Produktstapeln zusammengestellt werden und zwar oftmals in der Form einer vorbestimmten Reihenfolge, die vom Filialbetrieb vorgegeben wird.

Ein Beispiel für solche Ladeeinheiten, die bei der Kommissionierung mit besonderer Sorgfalt behandelt werden müssen, sind stapelbare Stückgutgebinde, welche Obst- und Gemüseprodukte beinhalten.

Die Ladeeinheiten können daher als Einweggebinde in der Form von beispielsweise Kartons oder auch als Mehrweggebinde vorliegen, welche aus einem Kunststoffwerkstoff oder auch aus Kartonmaterial gebildet sind oder auch um Klappboxen, also Gebinden mit einklappbaren Seitenwänden.

Der Versand von Frischwaren erfolgt oft vom Großverteiler aus in der Form der genannten Gebinde, die auf Ladungsträger in der Form von Paletten oder Rollcontainern Filiale gerecht aufgestapelt werden müssen. Dabei spielt die vorstehend schon genannte Reihenfolge bei der Bildung von Stapeln eine Rolle, die bei einer manuellen Bildung der Ladestapel auf dem Ladungsträger vom Bedienungspersonal herbeigeführt wird und bei der automatisierten Beladung der Ladungsträger von einer Steuervorrichtung in der Form beispielsweise eines Leitrechners vorgegeben wird.

Eine manuelle Bildung der Stapel auf dem Ladungsträger ist bei Gebinden, die oftmals bis zu 20 kg schwer sind, sehr mühsam und zeitaufwendig
Im Frischwarenlager mit Obst- und Gemüseprodukten liegen oftmals Gebindegrößen vor, welche hinsichtlich der Abmessungen standardisiert sind und üblicherweise eine Grundfläche von 600 mal 400 mm mit unterschiedlichen Höhen aufweisen oder eine Grundfläche von 300 mal 400 mm mit ebenfalls unterschiedlichen Höhen besitzen.

Die Gebinde sind dabei mehrheitlich oben offen ausgebildet und können mit herkömmlichen automatisierten Vorrichtungen zum Palettieren in der Form von Robotern mit Greifarmen nicht gehandhabt werden, da die Produkte in den Gebinden druckempfindlich sind und die Roboter oftmals zangengriffartige Aufnahmen aufweisen, welche die Seitenflächen der Gebinde mit Druckkraft beaufschlagen und so zu Beschädigungen der empfindlichen Produkte führen.

Darüber hinaus besitzen die bekannten Mehrfachgreifer, wie sie üblicherweise in der Kommissionierung im Retailbereich eingesetzt werden, Nachteile in Sachen der erzielbaren Stundenleistung, was wiederum im Widerspruch zu steht zu den vorstehend genannten empfindlichen und verderblichen Produkten.

Anhand der EP 0 799 780 A2 ist eine Palettierungsvorrichtung für verpackte Stapel aus Papierbögen oder dergleichen bekannt geworden, die einen höhenverstellbaren Palettentisch aufweist, auf dem eine zu beladende Palette bereitgehalten wird. Es ist ein Zuförderer vorgesehen, dessen Ablageende in Förderrichtung über den Palettentisch vor und zurück verfahrbar ist. Der Zuförderer ist darüber hinaus quer zu seiner Förderrichtung und quer zur Palette verfahrbar. Die Beschickung des Zuförderers erfolgt über eine stationäre Beschickungseinrichtung und einen Zwischenförderer, der seine Förderrichtung in Abhängigkeit von der Querposition des Zuförderers ändert.

Anhand der EP 1 462 394 B1 ist eine Beladevorrichtung für einen Ladungsträger bekannt geworden. Diese besitzt eine Beladezunge zur Aufnahme einer Ladeeinheit und einen die Ladeeinheit von der Beladezunge auf den Ladungsträger abstreifenden Abstreifer.

Anhand der EP 2 592 027 A1 ist eine Vorrichtung zum kontrollierten Ablegen und Anordnung von Objekten auf einem Ladungsträger bekannt geworden. Diese bekannte Vorrichtung weist ein sogenanntes Bull Nose Band auf, mit dem Ladeeinheiten in Richtung zu einem Beladeband befördert werden, von dem aus Ladeeinheiten auf einer Palette abgelegt werden.

Schließlich sind anhand der EP 2 247 517 B2 ein Kommissioniersystem und Verfahren zur Beladung eines Ladungsträgers bekannt geworden, bei dem eine Ladeeinheit über eine Zuführeinrichtung einer Ausrichteinrichtung zugeführt wird, von der die Ladeeinheit relativ zu einer Positionierfördereinrichtung ausgerichtet und auf diese abgegeben wird. Die Positionierfördereinrichtung weist zwei Förderbänder auf, die in einem zueinander einstellbaren Abstand angeordnet sind und in Richtung zu dem Ablageort der Ladeeinheit auf dem Ladungsträger ausgefahren werden können. Der Abstand zwischen den beiden Förderbändern der Positionierfördereinrichtung wird dabei hinsichtlich einer Fördereigenschaft der zu ladenden Stapeleinheit und/oder in Abhängigkeit von einer Lückenweite einer Stapellücke in einer Stapellage des Ladestapel ermittelt.

Ausgehend hiervon liegt der vorliegenden Erfindung die Aufgabe zugrunde, eine Vorrichtung zur automatisierten Beladung eines Ladungsträgers mit einem Ladestapel bildenden Ladeeinheiten bereitzustellen, welche wesentlich einfacher aufgebaut ist und dabei gleichzeitig eine deutlich höhere Palettierleistung als bekannte Vorrichtungen aufweist. Auch soll ein Verfahren zur automatisierten Beladung eines Ladungsträgers mit einen Ladestapel bildenden Ladeeinheiten bereitgestellt werden.

Die Erfindung weist zur Lösung dieser Aufgabe hinsichtlich der Vorrichtung die im Anspruch 1 angegebenen Merkmale auf. Vorteilhafte Ausgestaltungen hiervon sind in den weiteren Ansprüchen beschrieben.

Darüber hinaus weist die Erfindung hinsichtlich des Verfahrens die im Anspruch 13 angegebenen Merkmale auf, vorteilhafte Ausgestaltungen des Verfahrens sind in den weiteren Ansprüchen beschrieben.

Die Erfindung schafft eine Vorrichtung zur automatisierten Beladung eines Ladungsträgers mit einem Ladestapel bildenden Ladeeinheiten, wobei die Vorrichtung ein den Ladungsträger in mindestens eine ebene Richtung und eine Hochachsrichtung dazu beförderndes Fördermittel aufweist und die Vorrichtung eine Positionierfördereinrichtung mit mindestens zwei die Ladeeinheit in Richtung zum Ladungsträger fördernden Förderbändern aufweist, welche relativ zum Ladungsträger in Längsrichtung und in Querrichtung verfahrbar sind und die Vorrichtung einen die Ladeeinheit auf die Positionierfördereinrichtung befördernden Übergabeförderer aufweist, wobei die Positionierfördereinrichtung einen unabhängig von der Ladeeinheit vorgesehenen festen Seitenabstand zwischen den Förderbändern zueinander aufweist und der Übergabeförderer eine die Ladeeinheit aufnehmende Schiebeplatte und einen Schieber aufweist, welcher zur Beförderung der Ladeeinheit auf der Schiebeplatte in Richtung zu den Förderbändern der Positionierfördereinrichtung vorgesehen ist.

Die erfindungsgemäße Vorrichtung ist zur automatisierten Beladung eines Ladungsträgers vorgesehen. Zu diesem Zweck kann eine nachfolgend noch näher beschriebenen Steuerungsvorrichtung vorgesehen sein, welche die Vorrichtung steuert und darüber hinaus beispielsweise auch die Beschickung der Positionierfördereinrichtung mit Ladeeinheiten in der vorgeschriebenen Reihenfolge steuert.

Diese vorgeschriebene Reihenfolge kann vom Großverteiler vorgegeben werden, also beispielsweise dem Betreiber der Vorrichtung oder auch in Abhängigkeit von Abmessungen und Gewicht der einzelnen Ladeeinheiten bestimmt werden.

Die Vorrichtung kann ein Fördermittel aufweisen, welches zur Beförderung leerer Ladungsträger zur erfindungsgemäßen Vorrichtung vorgesehen ist und beispielsweise auch dazu vorgesehen ist, die mit Ladeeinheiten befüllten Ladungsträger wieder abzutransportieren und gegen einen leeren Ladungsträger auszutauschen.

Darüber hinaus weist die erfindungsgemäße Vorrichtung auch eine Positionierfördereinrichtung auf, welche zur Förderung und Positionierung der Ladeeinheiten am vorbestimmten oder berechneten Ort zur Stapelablage vorgesehen ist und hierzu mindestens zwei die Ladeeinheit in Richtung zum Ladungsträger fördernde Förderbändern aufweist, welche relativ zum Ladungsträger in Längsrichtung und in Querrichtung verfahrbar sind, damit die Ladeeinheit am vorbestimmten Ort auf dem Ladungsträger abgelegt werden kann.

Zudem besitzt die erfindungsgemäße Vorrichtung auch einen Übergabeförderer, welcher die Positionierung der Ladeeinheit auf die Positionierfördereinrichtung durchführt, sodass diese die Ladeeinheit übernimmt und diese dann zur Bildung von Stapeln auf dem Ladungsträger befördert.

Die Positionierfördereinrichtung zeichnet sich nach der Erfindung dadurch aus, dass zwischen den Förderbändern ein vorbestimmter Seitenabstand vorliegt, der nicht in Abhängigkeit von der zu befördernden Ladeeinheit verändert wird. Die Breite eines Fördergurts eines Förderbands kann in Abhängigkeit von der Breite der zu befördernden Ladeeinheit ausgewählt werden, sodass die entsprechende Ladeeinheit vollflächig auf dem Fördergurt aufliegen kann.

Wenn eine solche Ladeeinheit palettiert werden soll, dann muss auch nur ein Förderband in Förderrichtung betätigt werden, um die Ladeeinheit auf dem Ladungsträger abzulegen. Wenn stattdessen eine breitere Ladeeinheit palettiert werden soll, wird diese vom Übergabeförderer vor der Übergabe auf dann zwei Förderbänder auf einer nach der Erfindung vorgesehenen Schiebeplatte so platziert, dass die Ladeeinheit beim Übergang von der Schiebeplatte auf die beiden Förderbänder zumindest weitgehend mittig oder zentriert aufliegt, sodass die Ladeeinheit beim Transport durch die beiden Fördergurte der beiden Förderbänder während der gesamten Verweilzeit auf der Positionierfördereinrichtung auf den Fördergurte vollflächig aufliegt und von unten her unterstützt wird.

Die erfindungsgemäße Ausbildung der Positionierfördereinrichtung mit mindestens zwei Förderbändern, welche aber unabhängig von einer Eigenschaft der Ladeeinheit immer den gleichen Abstand zueinander aufweisen, sorgt dafür, dass eine kostenaufwändige Einheit zur Verstellung des Abstands zwischen den Förderbändern nicht notwendig ist und damit auch der damit einhergehende Steuerungsaufwand für die gesteuerte oder geregelte Verstellung des lichten Seitenabstands zwischen den Förderbändern nicht notwendig ist. Damit wird einerseits der Aufwand für die Herstellung und die Installation einer solchen Verstelleinheit vermieden und andererseits auch der Wartungsaufwand für diese Verstelleinheit. Zudem entfällt auch der Aufwand für die Integration der Funktionalität der Verstelleinheit in eine Steuervorrichtung oder einen Leitrechner für die Vorrichtung, wodurch ebenfalls eine technische Vereinfachung erzielt wird und die Komplexität des Systems verringert wird und der Wartungsaufwand sowohl in Sachen Hardware als auch in Sachen Software verringert wird.

Die erfindungsgemäße Ausbildung des Übergabeförderers mit einer die Ladeeinheit aufnehmenden Schiebeplatte sorgt ebenfalls für eine deutliche Vereinfachung der Vorrichtung verglichen mit bekannten Vorrichtungen. Eine Schiebeplatte besitzt den Vorteil, dass sie ohne Fördergurt betrieben werden kann, keinen eigenen Antrieb benötigt und auch keine eigene Steuerung für den Antrieb, wodurch wiederum eine Vereinfachung der erfindungsgemäßen Vorrichtung verglichen mit der bekannten Vorrichtung erzielt wird und der Installationsaufwand und Wartungsaufwand für die Hardware und die Software wieder verringert wird und darüber hinaus auch aufgrund des Wegfalls eines Antriebs für ein Förderband die Energiekosten beim Betrieb der erfindungsgemäßen Vorrichtung verglichen mit der bekannten Vorrichtung verringert werden können.

Dadurch, dass es nach der Erfindung vorgesehen ist, dass der Übergabeförderer einen Schieber aufweist, welcher zur Beförderung der Ladeeinheit auf der Schiebeplatte in Richtung zu den Förderbändern der Positionierfördereinrichtung vorgesehen ist, wird erreicht, dass ein Übergang von einem Band zu einem Band vermieden wird, der aufgrund unvermeidbarer Verschmutzungen der Bänder beim Betrieb einer solchen Vorrichtung problematisch ist, da jeder Bandübergang zu seitlichen Verlagerungen der Ladeeinheit oder Drehbewegungen der Ladeeinheit auf dem Band führen kann. Würde eine solche Drehbewegung der Ladeeinheit stattfinden, führt dies zu einer Störung beim automatisierten Beladung des Ladungsträgers, da eine solche verdrehte Ladeeinheit mit einer auf dem Ladungsträger bereits angeordneten Ladeeinheit kollidieren könnte und somit eine Systemstörung auftreten würde.

Da der erfindungsgemäße vorgesehene Schieber aber die Ladeeinheit auf der Schiebeplatte nicht nur befördert, sondern relativ zum Förderband oder den Förderbändern ausrichtet und die solchermaßen ausgerichtete Ladeeinheit von der Schiebeplatte direkt auf das Förderband oder die Förderbänder abgegeben wird und beim Abgebevorgang noch weiterhin vom Schieber ausgerichtet gehalten wird, ist die Gefahr eines seitlichen Verschiebens der Ladeeinheit relativ zu dem Förderband oder den Förderbändern vermieden und auch die Gefahr einer Drehbewegung der Ladeeinheit beim Übergang auf das oder die Förderbänder vermieden, da sich die Ladeeinheit während sie auf der Schiebeplatte aufliegt und vom Schieber geführt wird, nicht verdrehen kann.

Nach einer Weiterbildung der Erfindung ist es vorgesehen, dass der Schieber als Eckabschieber mit einer Widerlagerfläche und einer Schiebefläche ausgebildet ist und zur Positionierung relativ zur Schiebeplatte in Abhängigkeit der auf dem Ladungsträger vorbestimmbaren Position der Ladeeinheit ausgebildet ist.

Damit wird es erreicht, dass die von dem Schieber zu manipulierende oder verschiebende Ladeeinheit von einer nicht näher beschriebenen Fördertechnik in Richtung zum Schieber transportiert wird, bis die Ladeeinheit an der Widerlagerfläche des Schiebers zur Anlage kommt und dort beispielsweise schon relativ zu dem Förderband oder Förderbändern der Positionierfördereinrichtung ausgerichtet wird.

Der Schieber kann an der Schiebeplatte schon relativ zur vorbestimmten Position der Ladeeinheit auf dem Ladungsträger positioniert werden, bevor er von der Fördertechnik die Ladeeinheit in Empfang nimmt, sodass eine Querbewegung der Ladeeinheit auf der Schiebeplatte nicht mehr benötigt wird, sondern die Ladeeinheit im Eckbereich der Widerlagerfläche und Schiebefläche, die beispielsweise in einem 90 Grad Winkel zueinander angeordnet sind, positioniert wird und somit eine exakte Ausrichtung der Ladeeinheit relativ zu dem Förderband oder den Förderbändern erreicht wird, bevor die Ladeeinheit von dem Schieber auf das Förderband oder die Förderbänder verlagert wird.

Es ist nach einer Weiterbildung der Erfindung vorgesehen, dass der Schieber und die Förderbänder in Abhängigkeit der auf dem Ladungsträger vorbestimmten Position der Ladeeinheit unabhängig voneinander in Querrichtung zur Förderrichtung der Förderbänder positionierbar sind. Damit wird erreicht, dass der Schieber unmittelbar nachdem er die Ladeeinheit auf das oder die Förderbänder abgeschoben hat und das oder die Förderbänder den Weitertransport der Ladeeinheit auf den Ladungsträger durchführen, bereits wieder quer zur Förderrichtung der Förderbänder positioniert oder verlagert werden kann, um entsprechend der vorbestimmten Position der nächsten auf dem Ladungsträger zu positionierenden Ladeeinheit ausgerichtet zu sein. Dies umfasst auch den Vorteil, dass dann, wenn sich zum Weitertransport in Richtung zum Ladungsträger eine Ladeeinheit nur auf einem der Förderbänder befindet, der Schieber die nächste zu positionierende Ladeeinheit bereits auf das andere Förderband abschieben kann, welches diese Ladeeinheit dann in Richtung zum Ladungsträger weiter befördern kann, während sich die anderen Ladeeinheit noch auf dem vorher vom Schieber beschickten Förderband befindet. Hierdurch kann die Leistung der erfindungsgemäßen Vorrichtung gesteigert werden, also die Zahl der pro Stunde palettierten Ladeeinheiten.

Es ist nach einer Weiterbildung der Erfindung auch vorgesehen, dass die Förderbänder in Förderrichtung zum Ladungsträger unabhängig voneinander ansteuerbar ausgebildet sind. Damit kann beispielsweise ein Förderband in Förderrichtung angetrieben werden, während das andere Förderband stillsteht. Es ist damit auch umfasst, dass eines der Förderbänder in Richtung zum Ladungsträger, also in Längsrichtung ausgefahren oder bewegt oder verschoben wird, während das andere Förderband keine Ausfahrbewegung in Richtung zum Ladungsträger erfährt, was beispielsweise dann von Vorteil ist, wenn sich momentan nur auf einem der Förderbänder eine zum Ladungsträger zu transportierende Ladeeinheit befindet und dieses Förderband in Richtung zum Ladungsträger ausgefahren wird. Ein benachbartes Förderband ist zur Aufnahme einer nächsten Ladeeinheit bereit, da es sich benachbart zur Schiebeplatte angeordnet befindet.

Es ist also nach einer Weiterbildung der Erfindung vorgesehen, dass die Förderbänder in Richtung zum Ladungsträger unabhängig voneinander ausfahrbar ausgebildet sind und dabei in Querrichtung relativ zueinander einen stets gleich bleibenden Abstand zueinander aufweisen, sich also der Abstand zwischen den Förderbändern nicht verändert und der Abstand also beispielsweise auch nicht in Abhängigkeit von den Abmessungen oder einer anderen Ladeeinheiteigenschaft verändert wird.

Es ist nach einer Weiterbildung der Erfindung auch vorgesehen, dass diese eine Einrichtung zur Aufnahme jeweiliger seitlicher Anlageflächen eines als Rollcontainer ausgebildeten Ladungsträgers besitzt, wobei die Einrichtung zur weitgehend parallel zueinander vorgesehenen Ausrichtung der Anlageflächen ausgebildet ist.

Die erfindungsgemäße Vorrichtung ist also zur automatisierten Beladung eines Ladungsträgers vorgesehen, bei dem es sich um eine Palette, eine Europalette, einen Rollcontainer oder einen anderen Ladungsträger handeln kann. Es hat sich gezeigt, dass bei der Kommissionierung von Frischwaren oftmals Paletten und Rollcontainer zum Einsatz gelangen, die erfindungsgemäße Vorrichtung ist zur automatisierten Beladung sowohl von Paletten als auch von Rollcontainern vorgesehen und ausgebildet.

Es hat sich bei Rollcontainern, welche eine rollbare Plattform aufweisen, an deren Querseiten sich seitliche Anlageflächen in der Form von beispielsweise Seitengittern befinden, diese Seitengitter nach einer beispielsweise auch längeren Betriebszeit der Rollcontainer eine Seitenneigung in Richtung zur Längsmittelachse der rollbaren Plattform aufweisen, sich also der Aufnahmeraum zwischen den seitlichen Anlageflächen des Rollcontainer von der Plattform ausgehend entlang der Hochachse der seitlichen Anlageflächen verjüngt, also der Aufnahmeraum von der Plattform ausgehend nach oben betrachtet kleiner wird.

Dieser sich verkleinernde Aufnahmeraum des Rollcontainers wird bei der manuellen Beladung des Rollcontainers durch die Bedienperson vergrößert, indem die Bedienperson die seitlichen Anlageflächen in Richtung nach außen zieht oder schiebt oder drückt, um den Rollcontainer von der Plattform ausgehend Schicht für Schicht in Richtung nach oben mit Ladeeinheiten beladen zu können.

Die erfindungsgemäße Vorrichtung besitzt nun eine Einrichtung zur Aufnahme jeweiliger seitlicher Anlageflächen eines Ladungsträgers in der Form eines Rollcontainers und sie ist so ausgebildet, dass sie die seitlichen Anlageflächen weitgehend parallel zueinander ausrichten kann, sodass das Problem des sich von der Plattform ausgehend verjüngenden Aufnahmeraums des Rollcontainers beseitigt ist.

Es ist dabei nach einer Weiterbildung der Erfindung vorgesehen, dass die Einrichtung keilflächenförmig ausgebildet ist und eine einer jeweiligen Anlagefläche zugeordnete Kontaktfläche aufweist, welche in einer Draufsichtansicht von oben eine sich in Förderrichtung zum Ladungsträger erweiternde Konfiguration aufweist und/oder die Einrichtung eine einer jeweiligen Anlagefläche zugeordnete drehbar angeordnete Rolle aufweist, deren Außenumfangsfläche in einer Ansicht von oben auf einen Querschnitt durch die Rolle keilförmig ausgebildet ist.

Beide Konfigurationen, also die keilförmig ausgebildete Einrichtung als auch die Rolle mit einer in einer Ansicht von oben auf einen Querschnitt durch die Rolle keilförmig ausgebildeten Außenumfangsfläche dienen dazu, dass die Anordnung des Rollcontainers an der Keilfläche und/oder der Rolle dafür sorgt, dass die seitlichen Anlageflächen, also beispielsweise die Seitengittern mit der Keilfläche in Kontakt kommen oder mit der Rolle in Kontakt kommen und dieser körperlicher Kontakt zwischen den Seitengittern und der Keilfläche oder der Rolle dafür sorgt, dass die Seitengittern in Richtung nach außen gedrückt oder verlagert werden, also eine Konfiguration aufnehmen, bei der die Seitengittern weitgehend parallel zueinander ausgerichtet sind und somit eine Kollision von in den Aufnahmeraum des Rollcontainers befördert Ladeeinheiten mit den seitlichen Anlageflächen vermieden wird.

Es ist nach einer Weiterbildung der Erfindung auch vorgesehen, dass die Förderbänder jeweils ein Lasttrum und ein Leertrum aufweisen und eine sich in Richtung zum Ladungsträger in Hochachsrichtung verjüngende Konfiguration zwischen dem Lasttrum und dem Leertrum aufweisen.

Die Förderbänder können auf dem der Schiebeplatte benachbarten Endbereich eine Umlenkrolle und/oder Antriebsrolle aufweisen und auch an der dem Ladungsträger benachbarten Endbereich eine Umlenkrolle und/oder eine Antriebsrolle aufweisen.

Diese sich verjüngende Konfiguration kann dadurch erreicht werden, dass die Umlenkrolle und/oder Antriebsrolle am dem Ladungsträger zugeordneten Endbereich einen kleineren Durchmesser besitzt als die Umlenkrolle und/oder Antriebsrolle am Endbereich, der der Schiebeplatte zugeordnet ist.

Durch diese Verjüngung der Banddicke kann das Ablegen der Ladeeinheit in einer kleinen Höhendifferenz von Bandoberkante zur Oberkante der bereits abgelegten oder palettierten Ladeeinheit erfolgen. Die Förderbänder werden, wenn sich die zu palettierende Ladeeinheit benachbart zu der vorbestimmten Ablageposition angeordnet befindet, zurückgezogen. Dabei ist die Rückzugsgeschwindigkeit der Förderbänder etwas kleiner als die in Förderrichtung zum Ladungsträger bestehende Bandgeschwindigkeit, sodass die Ladeeinheit immer in Richtung zur Ablageposition bewegt wird. Dadurch kann eine Lücke oder ein Spaltraum zu einer bereits abgelegten oder palettierten Ladeeinheit oder einer Anschlagfläche im Bereich des oder an dem Ladungsträger geschlossen werden. Gleichzeitig können die Förderbänder dabei gemeinsam in Querrichtung verlagert werden, sodass eine Lücke oder ein Spaltraum zu der benachbarten Ladeeinheit ebenfalls geschlossen wird. Die Querbewegung der Förderbänder findet dabei so statt, dass diese immer einen gleich bleibenden seitlichen Abstand zueinander aufweisen.

Da die Erfindung auch umfasst, dass nur ein Förderband von zwei oder mehr Förderbändern in Förderrichtung zum Ladungsträger ausgefahren werden, kann auf diese Weise auch mit nur einem ausgefahrenen Förderband eine auf dem Ladungsträger bestehende schmale Lücke mit einer palettierten oder gestapelten Ladeeinheit geschlossen werden. Die Ladeeinheiten oder Gebinde befinden sich während des gesamten Transportvorgangs bis zur Ablage auf dem Ladungsträger auf dem Förderband oder den Förderbändern angeordnet, sodass sie von unten her eine flächige Unterstützung erfahren und auf diese Weise auch feuchte oder weiche Ladeeinheiten schonend automatisiert depalettiert werden können.

Es ist nach einer Weiterbildung der Erfindung auch vorgesehen, dass der Schieber zur Bewegung in Richtung zu den Förderbändern mit einer der Fördergeschwindigkeit der Förderbänder entsprechenden Geschwindigkeit ausgebildet ist. Dies führt dazu, dass die Ladeeinheit dann, wenn sie in den Erfassungsbereich des Förderbands oder der Förderbänder gelangt, mit einer der Fördergeschwindigkeit des Förderbands oder der Förderbänder entsprechenden Fördergeschwindigkeit durch den Schieber von der Rückseite her unterstützt werden und somit eine Verdrehung oder Winkelverlagerung der Ladeeinheit beim Übergang von der Schiebeplatte zum Förderband oder den Förderbändern vermieden wird.

Es ist nach einer Weiterbildung der Erfindung auch vorgesehen, dass die Förderbänder zu einer Verlagerungsbewegung in Richtung quer zur Förderrichtung der Förderbänder ausgebildet sind. Die Förderbänder werden dabei immer gemeinsam in Querrichtung zur Förderrichtung bewegt oder verlagert, sodass eine Veränderung des seitlichen Abstands zwischen den Förderbändern nicht vorgesehen ist und demgemäß auch eine Vorrichtung zur Veränderung des seitlichen Abstands zwischen den Förderbändern nicht erforderlich ist. Mit der Querbewegung der Förderbänder können Lücken oder Spalträumen zwischen den einzelnen Ladeeinheiten auf dem Ladungsträger verringert oder geschlossen werden.

Es ist nach einer Weiterbildung der Erfindung auch vorgesehen, dass die Positionierfördereinrichtung drei Förderbänder aufweist, welche unabhängig voneinander betreibbar sind und quer zur Förderrichtung zusammen verlagerbar sind.

Damit wird die Förderleistung der Förderbänder erhöht und die Stundenleistung der erfindungsgemäßen Vorrichtung verglichen mit der bekannten Vorrichtung wesentlich gesteigert.

Es ist nach einer Weiterbildung der Erfindung auch vorgesehen, dass die Vorrichtung eine Steuervorrichtung aufweist, welche zur Betätigung des Schiebers mittels eines Antriebs in Richtung zu den Förderbändern mit einer der Fördergeschwindigkeit der Förderbänder in Förderrichtung zum Ladungsträger entsprechenden Translationsgeschwindigkeit ausgebildet ist. Damit kann die erfindungsgemäße Vorrichtung ein Verdrehen der Ladeeinheit beim Übergang von der Schiebeplatte auf das Förderband oder die Förderbänder verhindern. Es wird dadurch auch verhindert, dass eine Ladeeinheit beim Übergang von der Schiebeplatte auf das Förderband oder die Förderbänder gestaucht wird. Ein solches Stauchen der Ladeeinheit könnte dann geschehen, wenn der Schieber mit einer höheren Translationsgeschwindigkeit in Richtung der Förderrichtung der Förderbänder bewegt werden würde, da dann eine Druckkraft vom Schieber auf die Rückseite der Ladeeinheit ausgeübt werden würde, die bereits teilweise auf dem Förderband aufliegt und dies bei einem beispielsweise feuchten Gebinde oder einer feuchten Ladeeinheit dazu führen würde, dass die Ladeeinheit gestaucht werden würde, was auch dazu führen würde, dass in der Ladeeinheit befindliche Produkte gedrückt oder zerdrückt oder gequetscht werden würden.

Eine solche Beschädigung der in der Ladeeinheit aufgenommenen Produkte ist insbesondere bei Frischwaren, wie beispielsweise Obst und/oder Gemüse zu vermeiden, da dies zu Druckstellen am Produkt führen würde.

Die erfindungsgemäße Vorrichtung zeichnet sich auch dadurch aus, dass die Steuervorrichtung zur Betätigung eines Förderbands mittels eines Antriebs in Richtung quer zur Förderrichtung des Förderbands unter Beibehaltung eines festen Seitenabstands zwischen den Förderbändern zueinander ausgebildet ist. Der seitliche Abstand zwischen den Förderbändern bleibt also immer gleich.

Es ist nach der Erfindung auch ein Verfahren vorgesehen zur automatisierten Beladung eines Ladungsträgers mit einen Ladestapel bildenden Ladeeinheiten, bei dem ein Ladungsträger in mindestens eine ebene Richtung und eine Hochachsrichtung dazu befördert wird und mittels einer Positionierfördereinrichtung mit mindestens zwei Förderbändern die Ladeeinheit in Richtung zum Ladungsträger befördert wird, wobei die Förderbänder relativ zum Ladungsträger in Längsrichtung und in Querrichtung verfahrbar sind und die Ladeeinheit mittels eines Übergabeförderers auf die Positionierfördereinrichtung befördert wird, wobei nach dem Verfahren die Ladeeinheit mittels eines Schiebers von einer Schiebeplatte auf die Förderbänder der Positionierfördereinrichtung befördert wird und die Förderbänder während einer Bewegung in Längsrichtung und in Querrichtung einen vorgesehenen festen Abstand zwischen den Förderbändern zueinander aufweisen.

Da die Förderbänder der Positionierfördereinrichtung zueinander unabhängig von der Ladeeinheit einen vorgesehenen festen Seitenabstand untereinander aufweisen, und dieser Abstand nicht verändert wird, also auch nicht in Abhängigkeit von der Ladeeinheit oder deren Abmessungen oder deren Position relativ zur Schiebeplatte und/oder relativ zum Ladungsträger verändert wird, ist auch kein Bedarf gegeben für eine Einheit zur Verstellung des Abstands und/oder eine Steuervorrichtung, welche zur Steuerung der Veränderung des Abstands vorgesehen ist. Damit wird eine wesentliche Verringerung der Komplexität der Vorrichtung und auch des Verfahrens zum Betrieb der Vorrichtung erreicht und auch der Energiebedarf zum Betrieb der Vorrichtung verringert.

Dadurch, dass der Übergabeförderer kein Förderband aufweist, sondern eine Schiebeplatte aufweist, auf der die zu palettierende Ladeeinheit im Bereich des Übergabeförderers zu liegen kommt und die Ladeeinheit dann mittels eines einfachen Schiebers in Richtung zu den Förderbändern der Positionierfördereinrichtung befördert wird, fällt das Förderband weg, ein Antrieb für das Förderband und auch eine Steuerung zum Betrieb des Förderbands fallen weg. Auch hierdurch wird die Komplexität des Systems verringert und ein entsprechender Kostenvorteil auch hinsichtlich Installation, Wartung und Betrieb der Vorrichtung erreicht.

Es ist nach einer Weiterbildung des erfindungsgemäßen Verfahrens auch vorgesehen, dass zur Verringerung eines Abstands zwischen auf dem Ladungsträger angeordneten Ladeeinheiten vor oder nach dem Erreichen einer vorbestimmten Position der Ladeeinheit in Längsrichtung relativ zum Ladungsträger eine Querbewegung der Förderbänder vor der Abgabe der Ladeeinheit auf dem Ladungsträger oder einer anderen Ladeeinheit durchgeführt wird, wobei bei der Querbewegung die Förderbänder als einheitliche Baueinheit quer bewegt werden.

Damit wird erreicht, dass der Abstand zwischen benachbarten Ladeeinheiten auf dem Ladungsträger verringert werden kann beziehungsweise benachbarte Ladeeinheiten aneinander liegend auf dem Ladungsträger angeordnet werden können und sich die Ladeeinheiten damit auf dem Ladungsträger auch gegenseitig aneinander abstützen können und darüber hinaus der auf dem Ladungsträger vorhandene Raum bestmöglich ausgenutzt wird.

Es ist nach einer Weiterbildung des erfindungsgemäßen Verfahrens auch vorgesehen, dass die Förderbänder vor der Ablage der Ladeeinheit entgegen der Förderrichtung der Bänder mit einer Rückzugsgeschwindigkeit zurückgezogen werden, welche geringer ist als die Fördergeschwindigkeit der Gurte der Förderbänder und die Förderbänder weitgehend zeitgleich mit der Rückzugsbewegung in Querrichtung verlagert werden. Auf diese Weise kann der für die Ablage der Ladeeinheiten auf dem Ladungsträger benötigte Zeitbedarf verringert werden und die Effizienz der erfindungsgemäßen Vorrichtung und des erfindungsgemäßen Verfahrens gesteigert werden und die Ablageleistung der Vorrichtung in Ladeeinheiten pro Zeiteinheit verglichen mit der bekannten Vorrichtung erhöht werden.

Schließlich ist es nach dem erfindungsgemäßen Verfahren auch vorgesehen, dass seitliche Anschlagflächen eines Ladungsträgers weitgehend parallel zueinander ausgerichtet werden, indem mit mit den Anschlagflächen in Kontakt befindlichen Keilflächen und/oder Rollen der lichte Abstand zwischen den Anschlagflächen verändert wird.

Auf diese Weise kann der lichte Abstand zwischen den Anschlagflächen des Ladungsträgers, bei dem es sich beispielsweise um einen Rollcontainer mit seitlichen Seitengittern handeln kann, so verändert werden, dass die Anschlagflächen automatisiert unter Einsatz der an der erfindungsgemäßen Vorrichtung vorgesehenen Einrichtung weitgehend parallel zueinander ausgerichtet werden und somit eine Kollision der automatisiert auf den Ladungsträger in der Form beispielsweise des genannten Rollcontainers beförderten Ladeeinheit mit den Seitengittern vermieden werden kann.

Der Rollcontainer kann mittels des Fördermittels, welches den Ladungsträger in eine Ebenenrichtung und eine Hochachsrichtung befördert, zu dem vorgegebenem Ablageort für den Ladungsträger befördert werden und dort auf eine erste Ebene zur Ablage einer ersten Lage an Ladeeinheiten auf dem Ladungsträger angehoben werden. Nachdem eine erste Lage der Ladeeinheiten auf den Ladungsträger positioniert worden ist, kann der Rollcontainer mittels des Fördermittels etwas abgesenkt werden, bis die obere Ebene der bereits palettierten Ladeeinheiten dann der Vertikalebene für die Anordnung der nächsten Ladeeinheiten entspricht. Während des Vorgangs des Absenkens des Rollcontainers können die Seitengitter des Rollcontainers mit der an der Vorrichtung vorgesehenen Einrichtung weiterhin in Kontakt bleiben, sodass die Seitengitter in einem Abstand weitgehend parallel zueinander gehalten werden, sodass sofort mit der Ablage oder Palettierung von weiteren Ladeeinheiten auf der bereits palettierten Ebene an Ladeeinheiten fortgefahren werden kann.

Die Erfindung wird im Folgenden anhand der Zeichnung näher erläutert. Diese zeigt in:
Fig. 1 eine perspektivische Darstellung einer Vorrichtung zur automatisierten Beladung eines Ladungsträgers, mit einem Rollcontainer als Ladungsträger und auch einer Europalette als Ladungsträger;
Fig. 2 eine Darstellung ähnlich derjenigen nach Fig. 1 mit einer Vielzahl von zur Beladung auf der dargestellten Europalette bereits bereitstehender Ladeeinheiten, welche schematisch dargestellt sind;
Fig. 3 eine Darstellung ähnlich derjenigen nach Fig. 2, welche die Europalette in der angehobenen und zur Aufnahme von Ladeeinheiten positionierten Stellung zeigt;
Fig. 4-8 perspektivische Darstellungen der Vorrichtung zur Erläuterung des Ablaufs der automatisierten Beladung des Ladungsträgers mit zwei Ladeeinheiten in sequenzieller Darstellung;
Fig. 9-11 perspektivische Darstellungen der Vorrichtung zur Erläuterung des Ablaufs der automatisierten Beladung des Ladungsträgers mit einer weiteren Ladeeinheit in sequenzieller Darstellung;
Fig. 12-15 perspektivische Darstellungen der Vorrichtung zur Erläuterung des Ablaufs der automatisierten Beladung des Ladungsträgers mit einer weiteren Ladeeinheit;
Fig. 16-18 perspektivische Darstellungen der Vorrichtung zur Erläuterung des Ablaufs der automatisierten Beladung des Ladungsträgers mit einer kleineren Ladeeinheit;
Fig. 19-21 perspektivische Darstellungen der Vorrichtung zur Erläuterung der automatisierten Beladung des Ladungsträgers mit einer weiteren kleineren Ladeeinheit;
Fig. 22-23 perspektivische Darstellungen der Vorrichtung zur Erläuterung der Positionierung einer Ladeeinheit in der Form eines Rollcontainers;
Fig. 24-25 zwei Darstellungen zur Erläuterung der weitgehend parallelen Ausrichtung der Seitengitter des Rollcontainers mittels der erfindungsgemäßen Vorrichtung;
Fig. 26-28 perspektivische Darstellungen zur Erläuterung der automatisierten Beladung eines Rollcontainers mit einer Ladeeinheit;
Fig. 29-31 perspektivische Darstellungen zur Erläuterung der automatisierten Beladung eines Rollcontainers mit einer weiteren Ladeeinheit;
Fig. 32-34 perspektivische Darstellungen zur Erläuterung der automatisierten Beladung eines Rollcontainers mit einer weiteren Ladeeinheit;
Fig. 35-37 perspektivische Darstellungen zur Erläuterung der automatisierten Beladung eines Rollcontainers mit einer weiteren Ladeeinheit;
Fig. 38-40 perspektivische Darstellungen zur Erläuterung der automatisierten Beladung eines Rollcontainers mit einer kleineren Ladeeinheit;
Fig. 41-44 perspektivische Darstellungen zur Erläuterung der automatisierten Beladung eines Rollcontainers mit einer weiteren kleineren Ladeeinheit;
Fig. 45-47 schematische Darstellungen in einer Ansicht von oben zur Erläuterung einer modifizierten Ausführungsform der Vorrichtung bei der automatisierten Beladung eines Rollcontainers; und
Fig. 48 eine schematische Darstellung in einer Ansicht von oben zur Erläuterung der Vorrichtung nach der Erfindung bei der automatisierten Beladung eines Ladungsträgers in der Form einer Europalette.

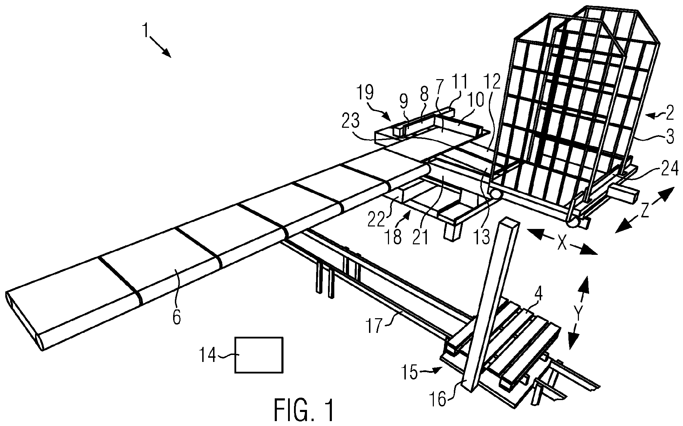

Fig. 1 der Zeichnung zeigt eine perspektivische Darstellung einer Vorrichtung 1 zur automatisierten Beladung eines Ladungsträgers 2, mit einem Rollcontainer 3 als Ladungsträger und auch einer Europalette 4 als Ladungsträger.

Die erfindungsgemäße Vorrichtung ist also dazu bestimmt und geeignet, unterschiedliche Ladungsträger 2 mit Ladeeinheiten automatisiert zu beladen, wobei sich bei dem Ladungsträger beispielsweise um eine Palette, Europalette oder auch einen Rollcontainer handeln kann.

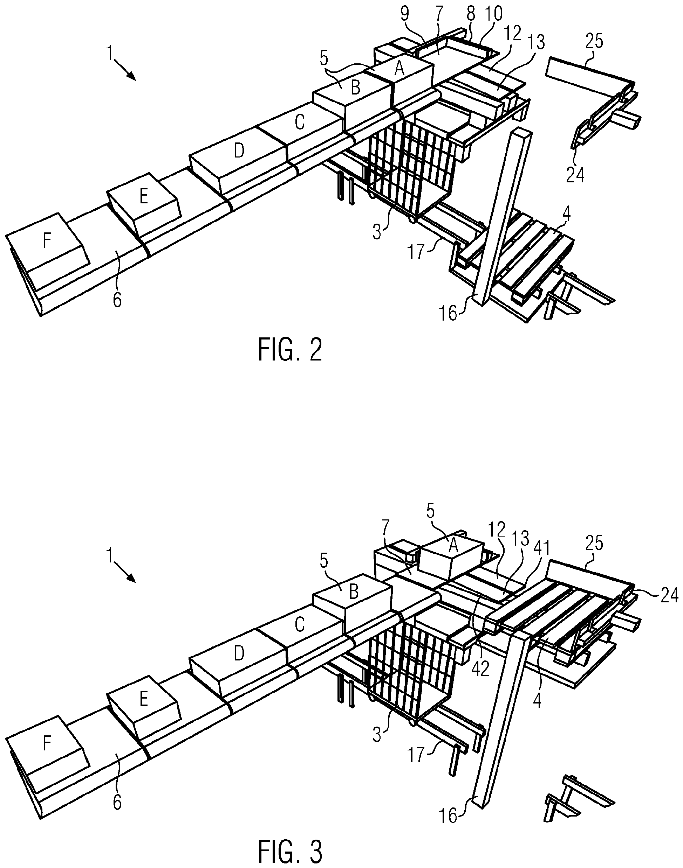

Die näher beispielsweise anhand von Fig. 2 der Zeichnung ersichtlichen Ladeeinheiten 5 werden über eine geeignete Fördertechnik an einer Zuführeinrichtung 6 bereitgestellt und beispielsweise von dieser Fördertechnik auf einer Schiebeplatte 7 bereitgestellt.

Benachbart zur Schiebeplatte 7 ist ein Schieber 8 vorgesehen, bei dem es sich bei der dargestellten Ausführungsform um einen Eckabschieber handelt, der eine Schiebefläche 9 und eine Widerlagerfläche 10 aufweist, wobei die beiden Flächen 9, 10 bei der dargestellten Ausführungsform des Eckabschieber 8 einen 90 Grad Winkel einschließen.

Der Schieber oder Eckabschieber 8 ist mittels eines schematisch dargestellten Antriebs 11 sowohl in Querrichtung Z, als auch in Längsrichtung X gesteuert oder geregelt bewegbar angeordnet, sodass eine auf der Schiebeplatte 7 angeordnete Ladeeinheit 5 durch den Schieber oder Eckabschieber 8 von der Schiebeplatte 7 auf ein Förderband 12 oder 13 oder auf beide Förderbänder 12, 13 befördert werden kann, wie dies nachfolgend noch näher erläutert werden wird.

Mittels einer Steuervorrichtung 14 kann die erfindungsgemäße Vorrichtung 1 gesteuert werden, wie dies nachfolgend noch näher erläutert werden wird.

Die Ladeeinheit 2 in der Form beispielsweise des Rollcontainers 3 und der Europalette 4 können mittels eines Fördermittels 15 in der Form beispielsweise eines Kombinationsförderlifts 16 in Richtung der Hochachsrichtung Y angehoben werden, um benachbart zum jeweiligen Auslassende der beiden Förderbänder 12, 13 angeordnet zu werden, wie dies anhand von Fig. 1 der Zeichnung ersichtlich ist.

Zur Beladung vorgesehene Ladungsträger 2 werden über einen Kombinationsförderer 17 dem Kombinationsförderlift 16 zugeführt, wie dies anhand von Fig. 1 der Zeichnung ersichtlich ist.

Der Kombinationsförderlift 16 befördert dann den Rollcontainer 3 oder die Europalette 4 in die zur Beladung mit den Ladeeinheiten 5 geeignete Höhe in Hochachsrichtung Y.

Die nach der Erfindung vorgesehene Positionierfördereinrichtung 18 umfasst die beiden Förderbänder 12, 13 und der Übergabeförderer 19 ist in der Form des Schiebers oder Eckabschiebers 8 ausgebildet.

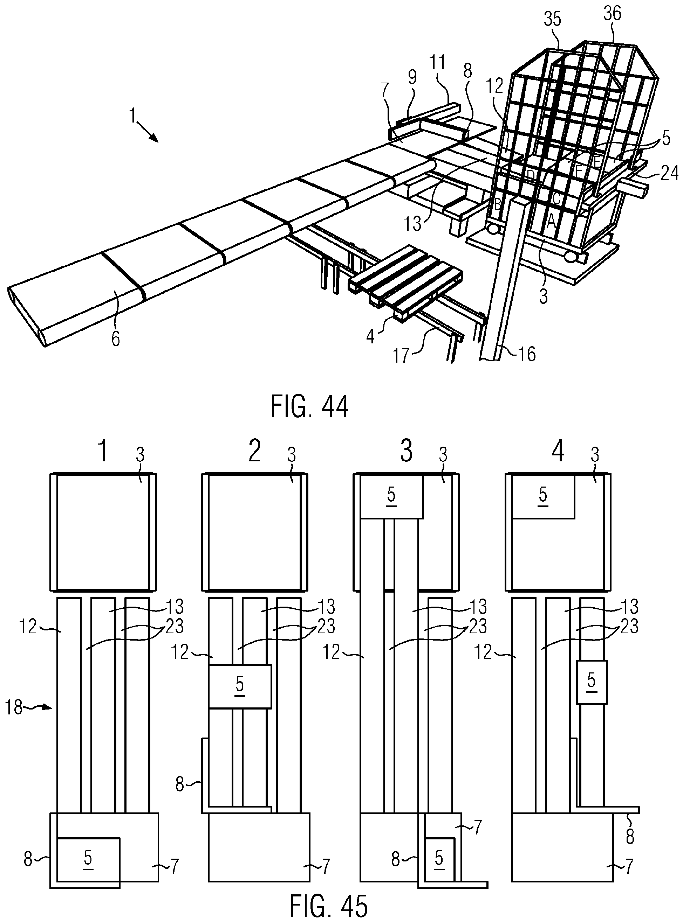

Die beiden Förderbänder 12, 13 oder auch ein anhand von Fig. 45 ersichtliches drittes Förderband 20 bilden also Elemente der Positionierfördereinrichtung 18 und können mittels einer jeweiligen Linearfördereinheit 21 jeweils individuell in Längsrichtung X nach dem Koordinatensystem gemäß Fig. 1 verschoben werden, um Ladeeinheiten 5 auf dem Ladungsträger 2 abzulegen.

Mittels einer anhand von Fig. 1 der Zeichnung ersichtlichen Lineareinheit oder Linearfördereinheit 22 werden die Förderbänder 12, 13, 20 in Querrichtung zum Ladungsträger 2 jeweils gemeinsam verlagert, es bedeutet dies, dass die Förderbänder 12, 13 einen anhand von beispielsweise Fig. 1 der Zeichnung ersichtlichen Seitenabstand zueinander aufweisen, der immer gleichbleibend ist, also nicht verändert wird, und insbesondere nicht in Abhängigkeit einer Eigenschaft der Ladeeinheit 5 verändert wird.

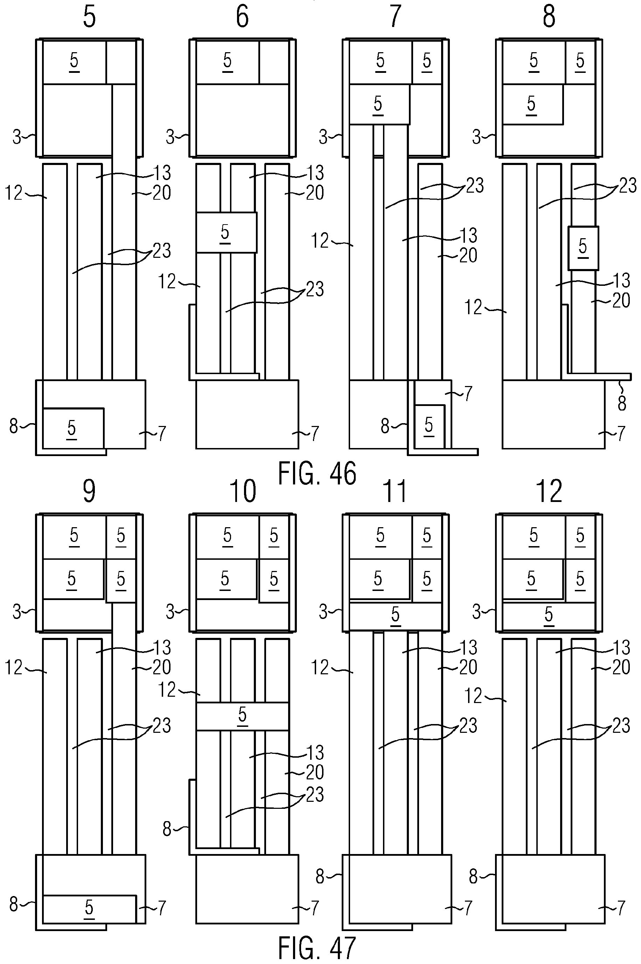

Eine solche Veränderung ist auch deshalb nicht vorgesehen, da die Ladeeinheit 5 auf nur ein Förderband 12 oder 13 oder 20 positioniert wird oder auch auf zwei Förderbänder 12, 13 oder 13, 20 oder beispielsweise auch auf drei Förderbänder 12, 13, 20 positioniert werden kann und zwar mittels des Eckabschiebers oder Schiebers 8, sodass eine Veränderung des Seitenabstands 23 zwischen den Förderbändern 12, 13, 20, der beispielsweise auch anhand von Fig. 46 der Zeichnung ersichtlich ist, nicht benötigt wird.

Da der Seitenabstand 23 zwischen den Bändern 12, 13, 20 nicht verändert werden muss, ist es auch nicht erforderlich, eine Einheit zur Verstellung oder Veränderung des Seitenabstands 23 apparativ vorhalten zu müssen und auch eine Steuerungseinheit, welche den Seitenabstand 23 beispielsweise in Abhängigkeit einer Fördereigenschaft der Ladeeinheit 5 verändert, ist nicht erforderlich, sodass sich die erfindungsgemäße Vorrichtung doch einen entsprechend hohen Kostenvorteil gegenüber einer Vorrichtung auszeichnet, welche eine Verstellung des Seitenabstands zwischen den Förderbändern vorsieht.

Da der Schieber oder Eckabschieber 8 mittels des beispielsweise anhand von Fig. 1 der Zeichnung ersichtlichen Antriebs 11 sowohl in Querrichtung Z als auch in Längsrichtung X verlagert werden kann, kann der Schieber 8 bereits vor der Aufnahme einer Ladeeinheit 5 auf die Schiebeplatte 7 in Querrichtung Z in einer der belade Position der Ladeeinheit 5 auf dem Ladungsträger 2 entsprechenden Position positioniert werden, wobei dies beispielsweise mittels der Steuervorrichtung 14 gesteuert wird.

Sobald also die auf dem Ladungsträger 2 zu positionierende Ladeeinheit 5 auf die Schiebeplatte 7 überführt wird, besitzt der Schieber oder Eckabschieber 8 in Querrichtung Z bereits eine der späteren Beladungsstellung in Richtung der Querachse Z auf dem Ladungsträger 2 entsprechende Position, sodass ein entsprechender Geschwindigkeitsvorteil gegenüber einer Situation erreicht werden kann, bei der die zu positionierende Ladeeinheit 5 zunächst in Z Richtung auf der Schiebeplatte 7 noch ausgerichtet oder positioniert werden muss, bevor der Eckabschieber oder Schieber 8 die Ladeeinheit 5 auf einem der Förderbänder oder den Förderbändern positioniert, wobei hierzu nur noch eine Bewegung des Schiebers oder Eckabschiebers 8 in Längsachsrichtung X nach Fig. 1 durchgeführt wird.

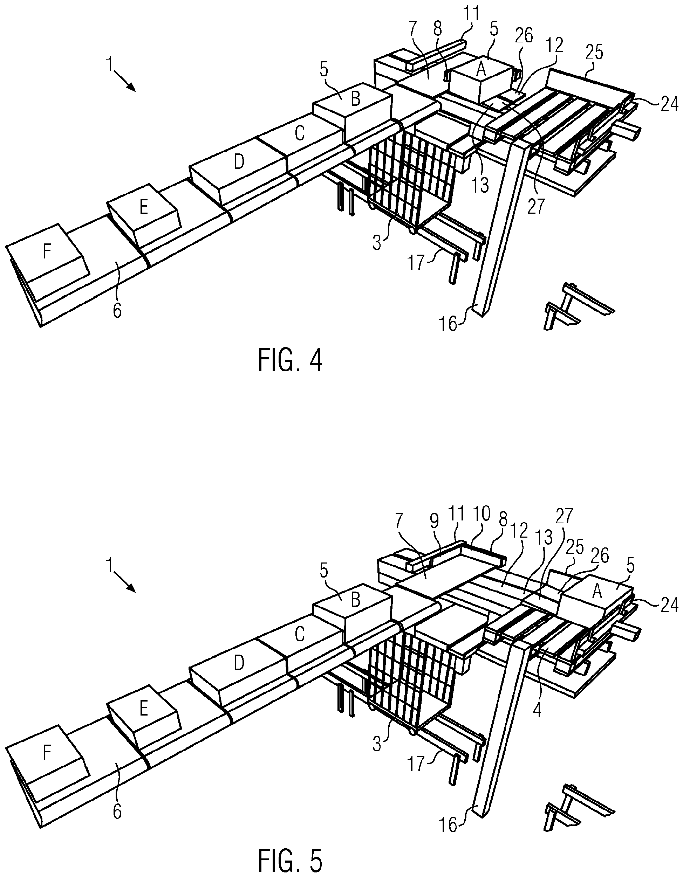

Ein beispielsweise in Fig. 1 der Zeichnung ersichtlicher Anschlag 24 dient als Endanschlag für die Positionierung der Ladeeinheiten 5 in Längsrichtung X, wie dies anhand von den Figuren ersichtlich ist, so beispielsweise anhand von Fig. 5 der Zeichnung. Darüber hinaus besitzt die Vorrichtung 1 auch einen Seitenanschlag 25, der beispielsweise anhand von Fig. 2 der Zeichnung ersichtlich ist und der Ausrichtung beziehungsweise Positionierung der Ladeeinheiten 5 einer nach allen Seiten offenen Europalette 4 dient, wobei dies beispielsweise ebenfalls anhand von Fig. 5 der Zeichnung ersichtlich ist.

Ganz allgemein sieht die Erfindung vor, dass bereits zu einer solchen Zeit, zu der die Ladeeinheit 5 vom Schieber oder Eckabschieber 8 auf ein einzelnes Förderband 12, 13, 20 verschoben wurde oder auf zwei oder drei Förderbänder 12, 13, 20 verschoben wurde, und somit die Ladeeinheit 5 den Erfassungsbereich der Schiebeplatte 7 verlassen hat, der Schieber oder Eckabschieber 8 in X und Z Richtung wieder in die Aufnahmestellung bewegt wird, die beispielsweise anhand von Fig. 1 der Zeichnung ersichtlich ist, sodass die Schiebeplatte 7 zur Aufnahme einer Ladeeinheit 5 bereit ist und der Schieber oder Eckabschieber 8 bereits entsprechend der Position Z in Querrichtung positioniert ist, welcher der Aufnahmeposition in Querrichtung Z auf dem zu beladenden Ladungsträger 2 entspricht.

Fig. 2 der Zeichnung zeigt eine Ausgangssituation, bei der eine mit A bezeichnete Ladeeinheit 5 vor der Schiebeplatte 7 angeordnet ist und von einer nicht näher dargestellten Fördereinrichtung auf die Schiebeplatte 7 befördert werden kann, bis sie an der Widerlagerfläche 10 anliegt. Dabei wird sie so relativ zum Eckabschieber 8 bewegt, dass sie zwischen der Widerlagerfläche 10 und der Schiebefläche 9 ausgerichtet wird und sich hinsichtlich der Winkellage exakt zur Beladeposition auf der Europalette 4 ausgerichtet befindet, die bei der Stellung in Fig. 2 noch nicht in Y Richtung angehoben wurde. Fig. 2 der Zeichnung zeigt auch, dass sich ein Rollcontainer 3 bereits in einer Warteposition auf dem Kombinationsförderer 17 angeordnet befindet und als nächster Ladungsträger 2 zur Beladung mit Ladeeinheiten 5 vorgesehen ist.

In der in Fig. 3 der Zeichnung ersichtlichen Lage wurde die Europalette 4 bereits in Hochachsrichtung Y in eine Stellung bewegt, in der sie sich zur Aufnahme von Ladeeinheiten 5 in einer ersten Stapelschicht positioniert angeordnet befindet. Auch der Seitenanschlag 25 und der Anschlag 24 beziehungsweise die Anschlagfläche 24 sind bereits so an der Europalette 4 als Ladungsträger 2 angeordnet worden, dass sie bündig mit den jeweiligen hinteren und linksseitigen Endflächen der Europalette 4 übereinstimmen. Die Ladeeinheit 5 ist bereits auf der Schiebeplatte 7 angeordnet worden, wie dies vorstehend bereits erläutert wurde.

Fig. 4 der Zeichnung zeigt einen nächsten Schritt in der Ablauffolge der automatisierten Beladung der Ladeeinheit 5 auf dem Ladungsträger 2.

Die Ladeeinheit 5 ist jeweils schematisch dargestellt und kann beispielsweise ein an der Oberseite offenes Gebinde mit Obst- und Gemüseprodukten darstellen.

Die Ladeeinheit 5 beziehungsweise das Gebinde 5 ist mittels des Schiebers 8 bereits auf beide Förderbänder 12, 13 übergeben worden, wobei hierzu die Gurte 26, 27 der Förderbänder 12, 13 eine synchronisierte Umlaufgeschwindigkeit aufweisen, also gleich schnell umlaufen. Der Eckabschieber 8 befördert bei der Positionierung der Ladeeinheit 5 auf den Förderbändern 12, 13 die Ladeeinheit 5 mit einer der Geschwindigkeit der Förderbänder 12, 13 in Förderrichtung (X Richtung) der Förderbänder entsprechenden Geschwindigkeit, sodass eine Beschädigung der Ladeeinheit 5 durch eine zu hohe Druckkraft, die von der Schiebefläche 9 auf die Rückseite des Gebindes 5 ausgeübt wird, vermieden werden. Auf diese Weise ist die Ausbildung von Druckstellen auf im Gebinde 5 befindlicher Obst- und Gemüseprodukte vermieden.

In einem nächsten, in Fig. 5 der Zeichnung ersichtlichen Beladeschritt sind die beiden Förderbänder 12, 13 in X Richtung in Richtung zum Ladungsträger 2 ausgefahren worden und die Ladeeinheit 5 befindet sich zur Ablage auf dem Ladungsträger 2 bereit. Dazu werden die Förderbänder 12, 13 so angesteuert, dass diese bei gleichbleibender Umlaufgeschwindigkeit entgegen der Förderrichtung, also entgegen der vorwärts gerichteten Richtung in X Richtung wieder in Richtung zur in Fig. 1 ersichtlichen Ausgangsstellung zurück bewegt werden, während die Gurte 26, 27 nach wie vor in Förderrichtung angetrieben werden.

Dies sorgt dafür, dass das an der Anlagefläche 24 anliegende Gebinde 5 genau im Eckbereich zwischen der Anlagefläche 24 und dem Seitenanschlag 25 auf dem Ladungsträger 4 in der ersten Stapelschicht oder Stapellage abgelegt wird.

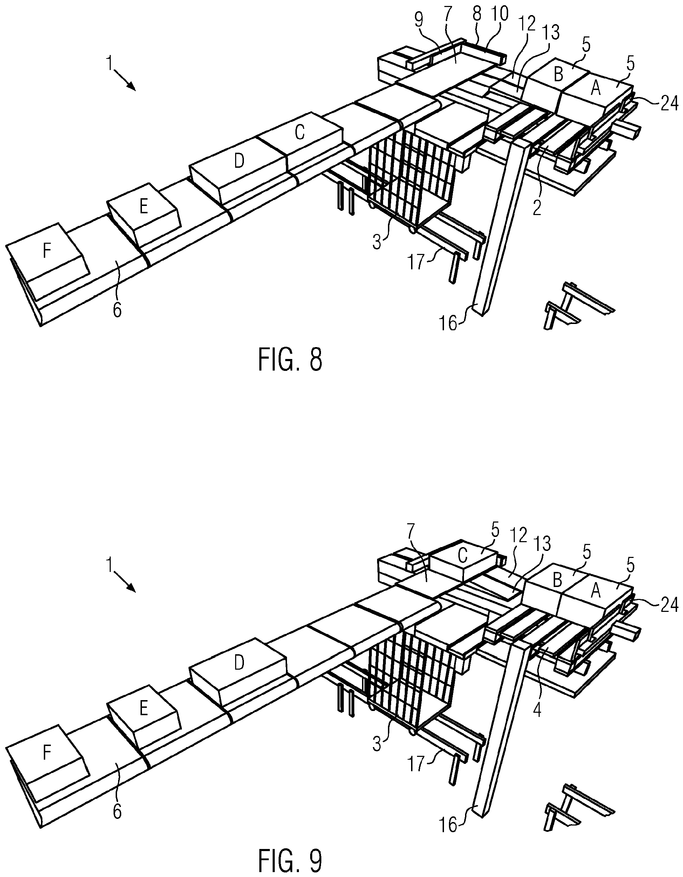

Noch während der Positionierung des ersten Gebindes 5 auf der Europalette 4 wird von der nicht näher dargestellten Fördertechnik die nächste mit B bezeichnete Ladeeinheit 5 auf die Schiebeplatte 7 bewegt und zwar so, dass diese an der Widerlagerfläche zehn des Eckabschiebers 8 in Anlage kommt und sich zur in Fig. 8 der Zeichnung gezeigten Beladeposition auf dem Ladungsträger 2 ausgerichtet befindet. Während des Vorgangs der Beschickung der Ladeeinheit 5 auf die Schiebeplatte 7 werden die beiden Förderbänder 12, 13 in Richtung der in Fig. 1 der Zeichnung ersichtliche Ausgangsposition zurück bewegt. Und zwar so weit, bis die der Europalette 4 zugeordneten Endbereiche 28 der Förderbänder 12, 13 an der späteren Übergabeposition auf dem Ladungsträger 2 befinden.

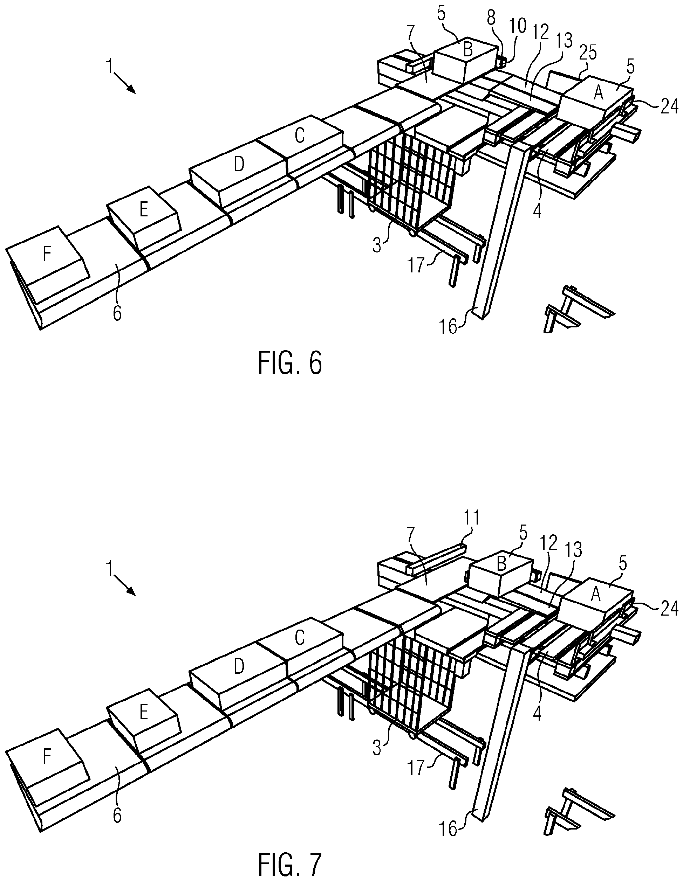

Fig. 7 der Zeichnung zeigt, dass die Ladeeinheit 5 vom Eckabschieber 8 bereits auf die Förderbänder 12, 13 übergeben wurde, welche die Ladeeinheit 5 dann in Richtung der späteren Beladeposition auf dem Ladungsträger 2 nach Fig. 8 befördern, wie dies anhand von Fig. 8 der Zeichnung ersichtlich ist.

Noch während der Beladung des Ladungsträgers 2 mit der Ladeeinheit 5, welche mit B in Fig. 8 der Zeichnung bezeichnet ist, wird eine nächste Ladeeinheit 5 (Ladeeinheit C) auf der Schiebeplatte 7 positioniert und vom Eckabschieber 8 übernommen.

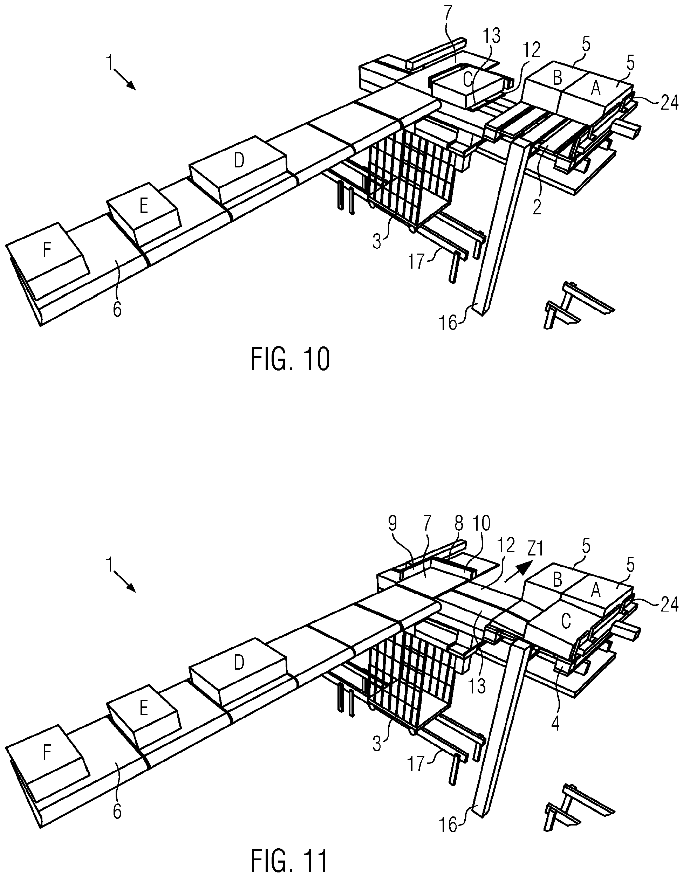

Noch vor der Übernahme der Ladeeinheit C durch den Eckabschieber 8 wird der Eckabschieber 8 in Querrichtung Z relativ zur Schiebeplatte 7 in die der späteren Position der Ladeeinheit C auf dem Ladungsträger 2 nach Fig. 10 der Zeichnung entsprechenden Position bewegt und sodann in Z Richtung von den beiden Förderbändern 12, 13 übernommen und, wie dies anhand von Fig. 11 der Zeichnung ersichtlich ist, in Richtung der späteren Beladeposition der Ladeeinheit C benachbart zur Ladeeinheit A auf die Europalette 4 befördert. Dabei werden die beiden Förderbänder 12, 13 gemeinsam in Richtung der Richtung Z1 nach Fig. 11 bewegt, also ohne eine Änderung eines Seitenabstands zwischen den beiden Förderbändern 12, 13, sodass ein bei der Beladung der Ladeeinheit C auf dem Ladungsträger 4 benachbart zu den beiden bereits positionierten Ladeeinheiten A, B eingehaltener Spaltraum zwischen der Ladeeinheit C und den Ladeeinheiten A, B vorzugsweise bis auf null verringert wird, sodass sich die Ladeeinheiten A, C auf dem Ladungsträger 4 aneinander angeordnet befinden. Selbstverständlich ist es im Rahmen der Erfindung auch möglich, dass die gemeinsame Bewegung der Förderbänder 12, 13 in Richtung der Richtung Z1 so von der Steuervorrichtung 14 gesteuert wird, dass ein Spaltraum zwischen den beiden Gebinden A, C aufrechterhalten bleibt. Dies kann beispielsweise dann von Vorteil sein, wenn sich in den Gebinden oder Ladeeinheiten A, C Obst- und Gemüseprodukte angeordnet befinden, die im Abstand zueinander gehalten werden sollen.

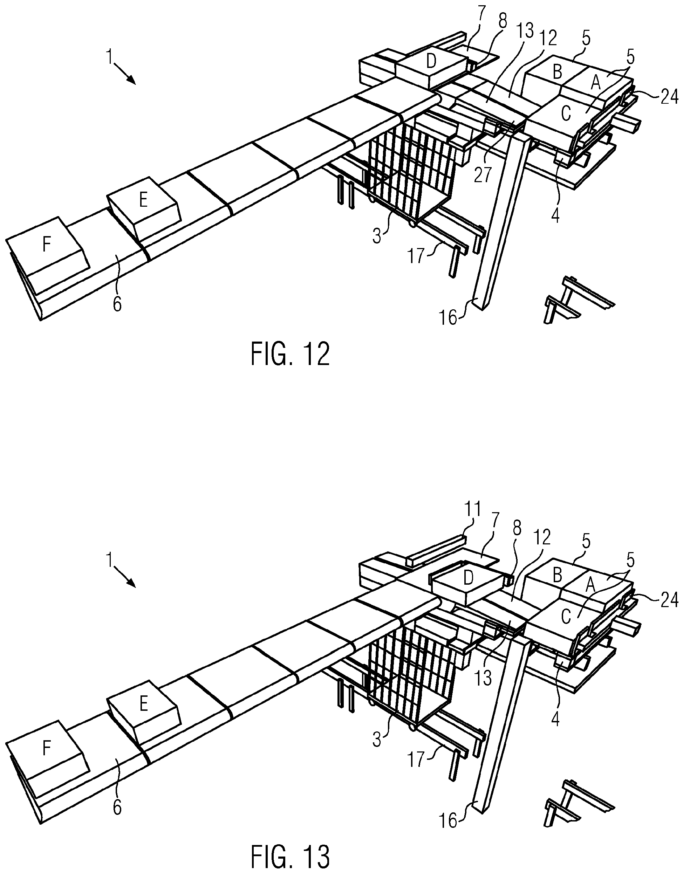

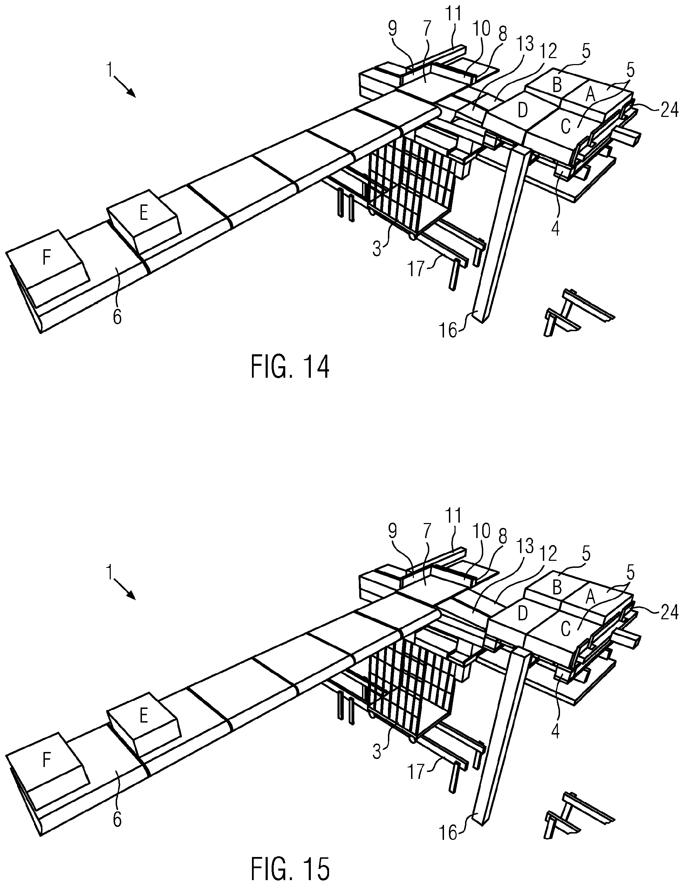

Noch während die Ladeeinheit C auf der Europalette 4 angeordnet wird, wird die Ladeeinheit D auf der Schiebeplatte 7 bereitgestellt, wie dies anhand von Fig. 12 der Zeichnung ersichtlich ist und zwar in Anlage an der Widerlagerfläche 10 des Eckabschieber 8, welcher bereits vor der Bereitstellung der Ladeeinheit D in Querrichtung Z der späteren Ablageposition der Ladeeinheit D auf der Europalette 4 positioniert worden ist, sodass eine nachfolgende Bewegung des Eckabschiebers 8 in Längsrichtung X dazu führt, dass die Ladeeinheit D auf die beiden Förderbänder 12, 13 abgegeben werden kann. Diese beiden Förderbänder 12, 13 befördern dann die Ladeeinheit D in Richtung zu der vorgegebenen Ablageposition auf der Produktpalette 4. Über eine Rückzugsbewegung der beiden Förderbänder 12, 13 entgegen der Förderrichtung der umlaufenden Gurte 26, 27 bei gleichzeitig aufrecht erhaltener Förderbewegung der beiden Gurte 26, 27 wird die Ladeeinheit D auf der Europalette 4 benachbart zu den bereits positionierten Ladeeinheiten A, B, C an der vorbestimmten Ablageposition der Europalette 4 abgelegt. Die einzelnen Schritte der Ablage der Ladeeinheit D auf der Europalette 4 sind anhand von Fig. 12, 13 und 14 sowie 15 ersichtlich.

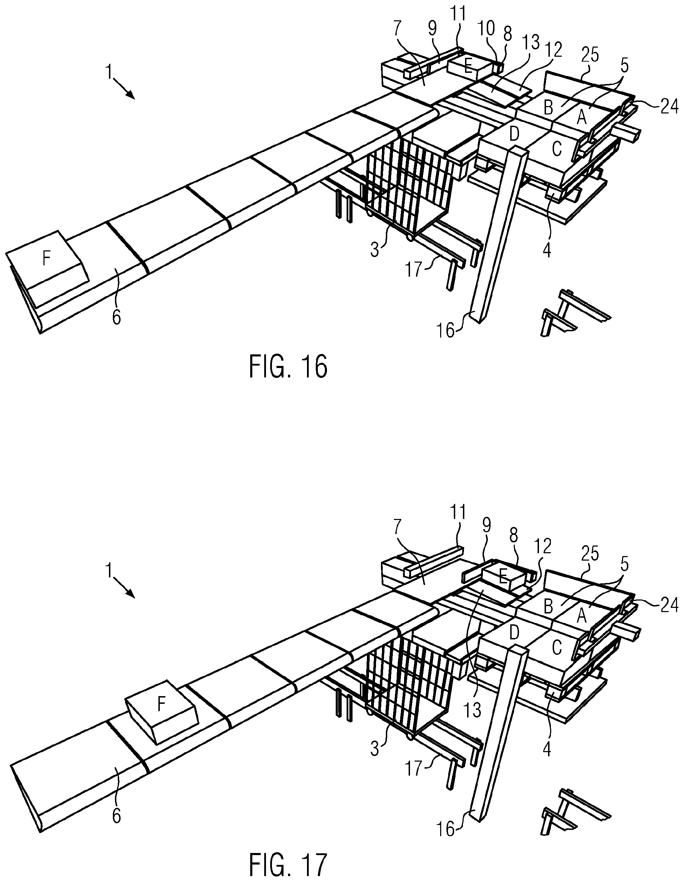

Noch während die beiden Förderbänder 12, 13 die Ladeeinheit D auf der Europalette 4 ablegen, bewegt sich der Eckabschieber 8 relativ zur Schiebeplatte 7 auf die der in Querrichtung Z der nächsten Ladeeinheit E auf der Europalette 4 entsprechenden Position, wie dies anhand von Fig. 16 der Zeichnung ersichtlich ist. Die Ladeeinheit E ist bereits an der Widerlagerfläche 10 des Eckabschiebers 8 positioniert worden und eine nachfolgende Bewegung des Eckabschiebers 8 in Richtung der Längsrichtung X nach Fig. 1 der Zeichnung führt dazu, dass die auf der Schiebeplatte 7 aufliegende Ladeeinheit E, die sich an der Widerlagerfläche 10 und der Schiebefläche 9 des Eckabschiebers 8 ausgerichtet befindet, auf das Förderband 12 befördert wird, während das Förderband 13 leer bleibt, da die Ladeeinheit E nur halb so breit ist wie die bisher auf der Europalette 4 positionierten Ladeeinheiten A, B, C, D.

Eine nachfolgende Bewegung, mit der das mit der Ladeeinheit E beladene Förderband 12 in Richtung der Ablageposition auf der auf der Europalette 4 bereits platzierten Ladeeinheit A ausgefahren wird, also in Richtung X ausgefahren wird, führt dazu, dass - wie dies anhand der weiteren Figuren 17, 18, 19 der Zeichnung ersichtlich ist - die Ladeeinheit E auf der Oberseite der Ladeeinheit A abgelegt wird und somit eine Stapelbildung von Ladeeinheiten auf der Europalette 4 stattfindet.

Wie es anhand der Figuren 16 bis 19 der Zeichnung ersichtlich ist, wurden der Anschlag 24 und die Seitenfläche 25 in Hochachsrichtung Y auf die in Hochachsrichtung entsprechende Ebene zur Positionierung der Ladeeinheit E bewegt, sodass die Ladeeinheit E an der Anschlagfläche des Anschlags 24 zur Anlage kommt und über eine Querbewegung der beiden Förderbänder 12, 13 zusammen in Querrichtung Z an dem Seitenanschlag 25 beziehungsweise der Seitenanschlagfläche des Seitenanschlags 25 zur Anlage kommt und somit eine exakte Ausrichtung der Ladeeinheit E auf der oberen Oberfläche 29 (Fig. 16) der bereits positionierten Ladeeinheit A stattfindet.

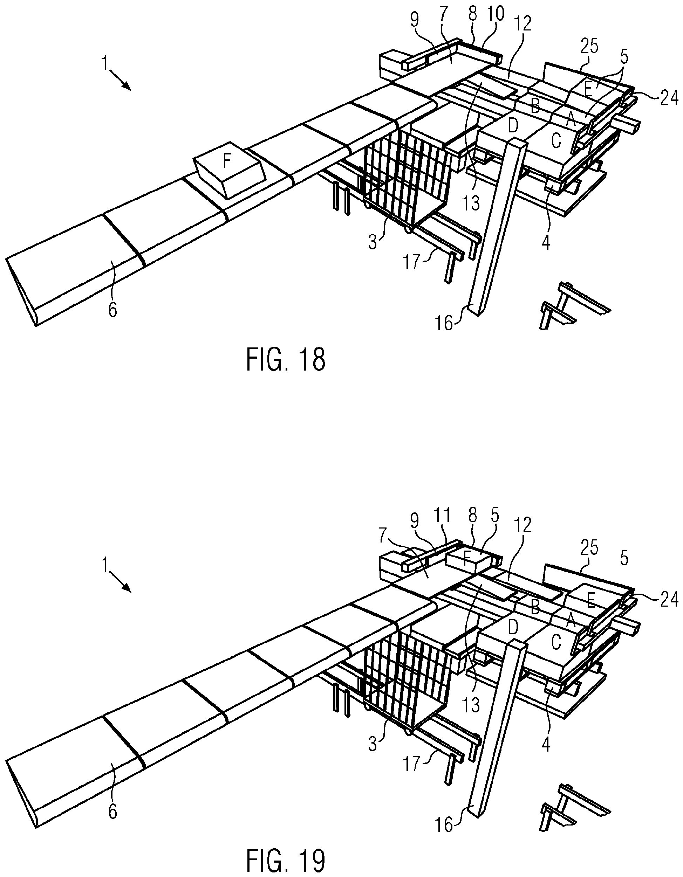

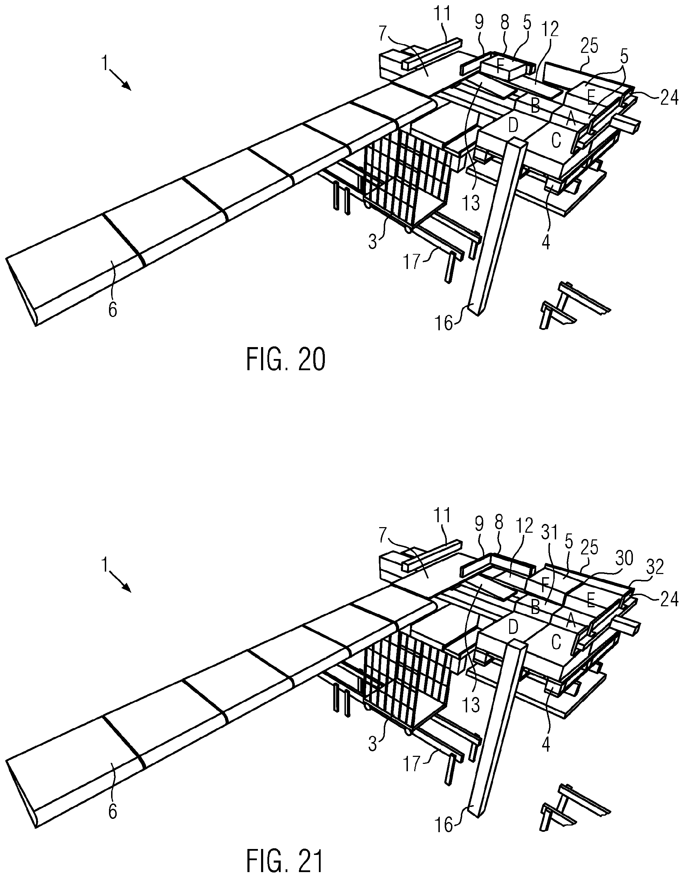

Noch während die Ladeeinheit E auf der oberen Oberfläche 29 der Ladeeinheit A abgelegt wird, wird die nächste Ladeeinheit F auf die Schiebeplatte 7 befördert, wie dies anhand von Fig. 19 der Zeichnung ersichtlich ist und dann, wie dies anhand von Fig. 20 der Zeichnung ersichtlich ist, vom Eckabschieber 8 auf das Förderband 12 bewegt und zwar in durch die Schiebefläche 9 und die Widerlagerfläche 10 zur Längsrichtung des Förderbands 12 exakt ausgerichteten Weise. Dadurch wird die Gefahr einer Verdrehung der Ladeeinheit F bei der Anordnung auf dem Förderband durch die exakte Positionierung der Ladeeinheit mittels der Schiebefläche 9 und der Widerlagerfläche 10 des Eckabschiebers 8 vermieden. Der Eckabschieber 8 schiebt dabei die Ladeeinheit F auf das Förderband 12 mit einer der Fördergeschwindigkeit des Förderbands 12 entsprechenden Geschwindigkeit, wie dies vorstehend bereits erläutert wurde, sodass einerseits die Gefahr einer Verdrehung der Ladeeinheit und einer Beschädigung der Ladeeinheit F sicher vermieden ist.

Wie es sich anhand von Fig. 21 der Zeichnung ergibt, wird die Ladeeinheit F direkt an die Stirnseite 30 der bereits positionierten Ladeeinheiten G auf der Oberfläche oder Oberseite 31 der bereits positionierten Ladeeinheit B abgelegt. Ein etwaiger Seitenabstand der Ladeeinheit F relativ zur Anlagefläche 32 des Seitenanschlag 25 wird durch eine Querbewegung der beiden Förderbänder 12, 13 in Querrichtung Z bis auf null reduziert. Ein solcher Seitenabstand kann sich beispielsweise dadurch ergeben, dass die beiden Förderbänder 12, 13 bei der Bewegung der zu positionierenden Ladeeinheit F in Längsrichtung X gesteuert im Abstand zur Anlagefläche 32 gehalten werden, wodurch eine Kollision der Ladeeinheit F durch ihre Stirnseite mit der Anlagefläche 32 vermieden werden kann. Durch die nachfolgende Querbewegung der beiden Förderbänder 12, 13 in Querrichtung Z wird dieser absichtlich herbeigeführte Seitenabstand zu null reduziert, sodass eine maximale Auslastung der von der Europalette vier bereitgehaltenen Ablagefläche erzielt wird und darüber hinaus die auf der Europalette 4 gebildeten Stapel an Ladeeinheiten exakt übereinander ausgerichtet werden.

Über eine Wiederholung der unter Bezugnahme auf die vorliegende Erläuterung geschilderten Ablaufvorgänge bei der automatischen Beladung des Ladungsträgers 4 können weitere Ebenen auf der Europalette 4 platzierter Ladeeinheiten bereitgestellt werden, sodass mit der erfindungsgemäßen Vorrichtung automatisiert Stapel von Ladeeinheiten auf dem Ladungsträger gebildet werden.

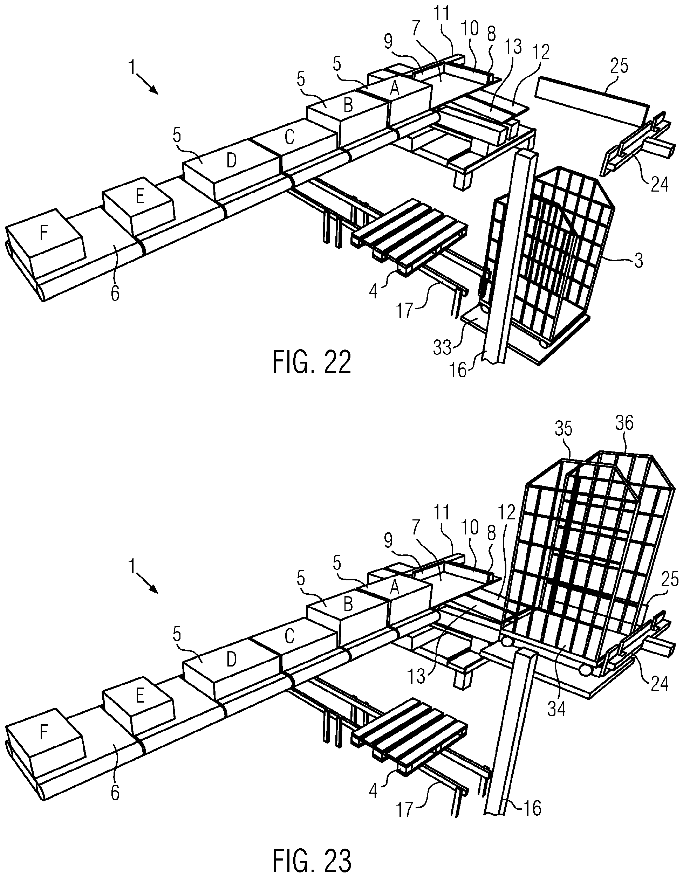

Nachfolgend wird unter Bezugnahme auf die Figuren 22 bis 44 die Beladung eines Ladungsträgers in der Form eines Rollcontainers 3 mit Ladeeinheiten erläutert werden.

Fig. 22 der Zeichnung zeigt, dass der Rollcontainer 3 bereits auf einer Hubplattform 33 platziert wurde und zwar mittels des Kombinationsförderers 17, der als nächsten Ladungsträger bereits eine Europalette 4 bereithält.

Über den Kombinationsförderlift 16, der sowohl Europaletten 4 als auch Rollcontainer 3 in Hochachsrichtung Y befördern kann, wird in einem nächsten Schritt der Rollcontainer 3 in Hochachsrichtung Y angehoben und zwar bis auf eine Höhe, bei der sich die Aufnahmefläche 34 des Rollcontainers 3 in Hochachsrichtung Y mit der in Hochachsrichtung Y entsprechenden Ablageebenenhöhe der Förderbänder 12, 13 weitgehend deckt.

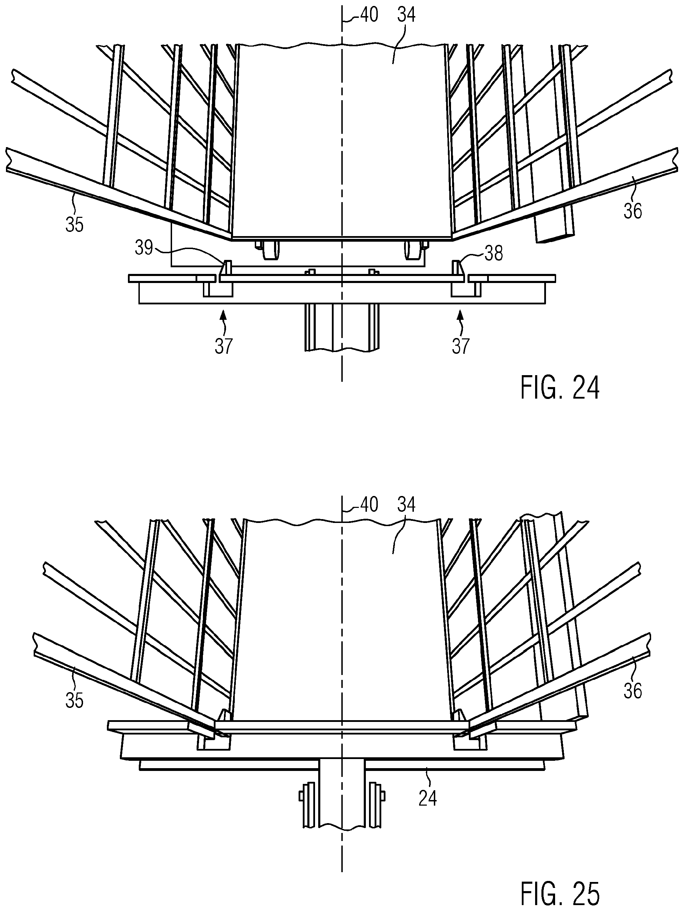

Der Anschlag 24 befindet sich noch im lichten Abstand zu den Seitengittern 35, 36 des Rollcontainers 3 angeordnet. Es hat sich gezeigt, dass die Seitengitter 35, 36 von Rollcontainern 3, welche sich bereits im Einsatz befunden haben, dazu neigen, sich in Richtung der in Fig. 24 der Zeichnung dargestellten Längsmittelachse 40 der Aufnahmefläche 34 verlagern. Diese Verlagerungsbewegung der Seitengitter 35, 36 würde dazu führen, dass eine von der erfindungsgemäßen Vorrichtung 1 auf der Aufnahmefläche 34 zu platzierende Ladeeinheit bei der Verlagerungsbewegung in Längsrichtung X mit einem der Seitengitter 35, 36 oder beiden Seitengittern 35, 36 kollidieren würde.

Um eine solche Kollision zu vermeiden, weist die erfindungsgemäße Vorrichtung 1 eine Einrichtung 37 auf, die zur Aufnahme jeweiliger seitlicher Anlageflächen eines Rollcontainers 3 ausgebildet ist, also beispielsweise zur Aufnahme der Seitengitter 35, 36 des Rollcontainers 3 dient.

Wie es ohne weiteres anhand von Fig. 24 der Zeichnung ersichtlich ist, besitzt die Einrichtung 37 keilflächenförmig ausgebildete Aufnahmen 38, 39, welche mit den Seitengittern 35, 36 in Eingriff gelangen, während der Anschlag 24 in X-Richtung auf die Seitengitter 35, 36 zugestellt wird. Eine solche Verlagerungsbewegung des Anschlags 24 führt dazu, dass die Seitengitter 35, 36 aufgespreizt werden, sodass die Seitengitter 35, 36 weitgehend parallel zueinander ausgerichtet vorliegen und nunmehr eine Kollisionsgefahr einer zu platzierende Ladeeinheit mit den Seitengittern 35, 36 vermieden ist.

Bei einer Absenkbewegung des Rollcontainers 3 in Hochachsrichtung Y, die dann durchgeführt wird, wenn beispielsweise eine erste Lage von Ladeeinheiten auf der Aufnahmefläche 34 platziert worden ist, verbleiben die keilförmigen Aufnahmen 38, 39 an den Seitengittern 35, 36 in Anlage, sodass eine Kippbewegung der Seitengitter 35, 36 in Richtung zur Längsmittelachse 40 (Fig. 24) vermieden ist.

Alternativ hierzu ist es nach der Erfindung auch vorgesehen, dass die Aufnahmen 38, 39 wurde Absenkbewegung des Rollcontainers 3 außer Eingriff mit den Seitengittern 35, 36 gebracht werden und zwar durch eine entsprechende Rückzugsbewegung des Anschlags 24 relativ zum Rollcontainer 3 und nach der Durchführung der Absenkbewegung des Rollcontainers 3 die Aufnahmen 38, 39 wieder mit den Seitengittern 35, 36 in Eingriff gebracht werden und die Seitengitter auf diese Weise wieder weitgehend parallel zueinander ausgerichtet vorliegen.

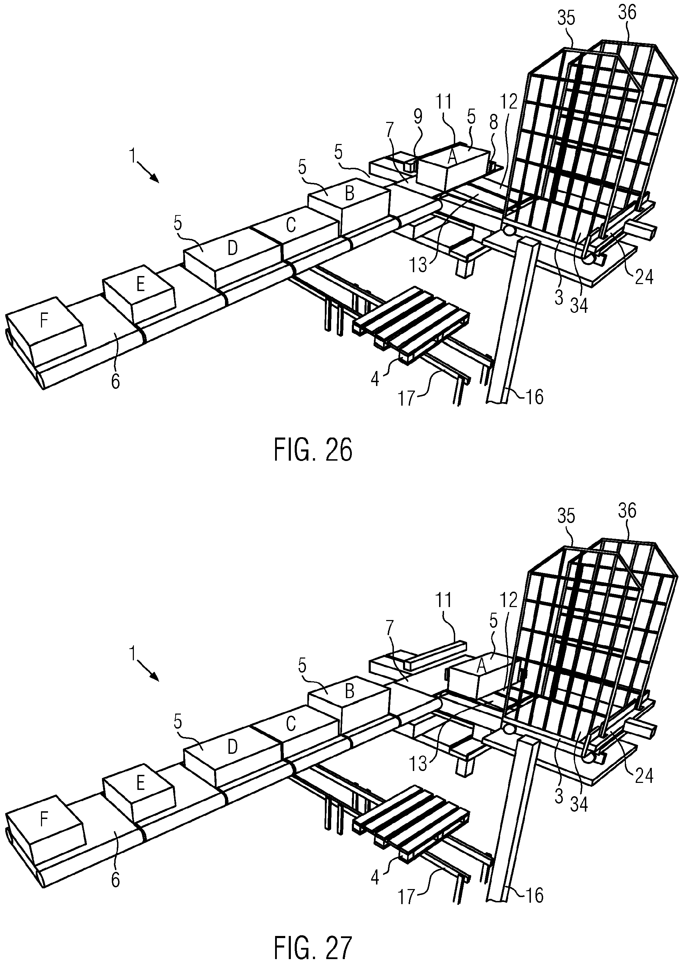

Fig. 26 der Zeichnung zeigt den Rollcontainer 3 in einer zur Aufnahme einer ersten Ladeeinheit A bereitgehaltenen Stellung.

Wie es anhand von Fig. 26 darüber hinaus ersichtlich ist, ist eine erste Ladeeinheit A bereits auf der Schiebeplatte 7 positioniert worden und zwar so, dass sich der Eckabschieber 8 bereits in Querrichtung Z in einer der späteren Ablageposition der Ladeeinheit A in Querrichtung Z auf dem Rollcontainern 3 entsprechenden Position befindet.

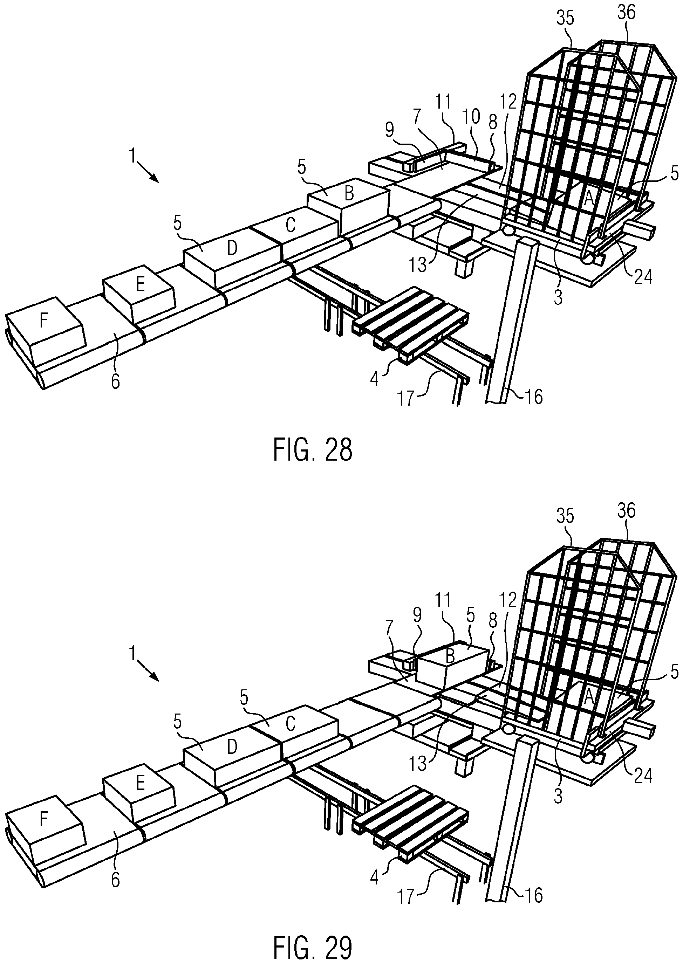

Über eine Abschiebebewegung des Eckabschiebers 8 an der Ladeeinheit A wird diese auf die beiden Förderbänder 12, 13 befördert, wobei dies anhand von Fig. 27 der Zeichnung ersichtlich ist. Die beiden Förderbänder 27 nehmen die Ladeeinheit A in einer ausgerichteten Ausrichtung relativ zur Ablageposition an der Aufnahmefläche 34 des Rollcontainers 3 aufgrund werden unter Beibehaltung einer Umlaufbewegung der Förderbänder 12, 13 in Förderrichtung X in Längsrichtung X in Richtung auf die Aufnahmefläche 34 ausgefahren, wie dies anhand von Fig. 28 der Zeichnung ersichtlich ist. Die Ladeeinheit A gelangt an der vorbestimmten Ablageposition an der Widerlagerfläche des Anschlags 24 in Anlage und gleichzeitig werden die beiden Förderbänder 12, 13 entgegen der Förderrichtung X zurückgezogen, sodass die Ladeeinheit A sanft auf der Aufnahmefläche 34 abgelegt wird. In ähnlicher Weise werden die Ladeeinheiten sanft auf der jeweiligen Ablagefläche einer Europalette 4 abgelegt.

Die sanfte Ablage der jeweiligen Ladeeinheiten 5 auf dem Ladungsträger 2 kann dadurch herbeigeführt werden, dass die jeweiligen Förderbänder 12, 13, 20 an dem jeweiligen Ablageendbereich 41 (Fig. 3) einen kleineren Umschlingungsdurchmesser aufweisen als am gegenüberliegenden Endbereich, sodass sich eine keilförmige Konfiguration 42 (Fig. 3) der Förderbänder 12, 13 in Förderrichtung X ergibt. Damit wird vermieden, dass die Ladeeinheiten auf der jeweiligen Aufnahmefläche der Rollcontainer 3 oder Europaletten 4 oder einem bereits darauf gebildeten Stapel an Ladeeinheiten über eine Fallbewegung der Ladeeinheiten platziert werden, also nicht auf die Aufnahmeflächen oder bereits gebildete Stapel von Ladeeinheiten herunterfallen, sondern sanft darauf abgelegt werden.

Fig. 28 der Zeichnung zeigt auch, dass sich der Eckabschieber 8 während der Ablage der Ladeeinheit 8 auf dem Rollcontainer 3 bereits in einer in Querrichtung Z ausgerichteten Position befindet, welche der in Z Richtung späteren Position der Ladeeinheit B auf dem Rollcontainer 3 entspricht.

Diese Ladeeinheit B wird nun mittels einer nicht näher dargestellten Fördereinrichtung auf die Schiebeplatte 7 befördert und gelangt dort mit der Widerlagerfläche 10 des Eckabschiebers 8 in Kontakt und kann vom Eckabschieber 8, wie dies anhand von Fig. 29 der Zeichnung ersichtlich ist, wieder auf die beiden Förderbänder 12, 13 transportiert werden. Diese werden in Richtung X auf den Rollcontainer 3 zu ausgefahren, bis die Ablageposition der Ladeeinheit B auf dem Rollcontainer 3 erreicht wurde und die Ladeeinheit B sanft auf dem Rollcontainer 3 abgesetzt werden kann.

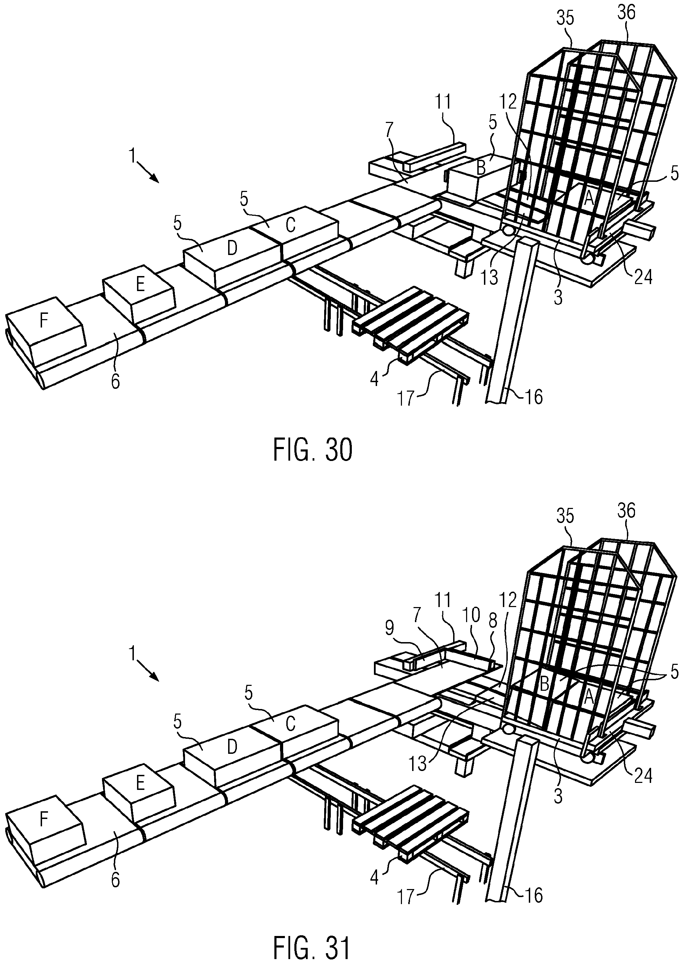

Die soeben geschilderte Vorgehensweise bei der Ablage der Ladeeinheit B auf dem Rollcontainer 3 ist in einzelnen Schritten anhand der Figuren 29, 30 und 31 der Zeichnung ersichtlich. Noch während die Ladeeinheit B von den beiden Förderbändern zwölf, 13 auf dem Rollcontainer 3 platziert wird, wird der Eckabschieber 8 bereits wieder in X Richtung in Richtung zur Schiebeplatte 7 zurückgezogen und ist zur Aufnahme einer nächsten Ladeeinheit C bereit, wie dies anhand von Fig. 31 der Zeichnung ersichtlich ist.

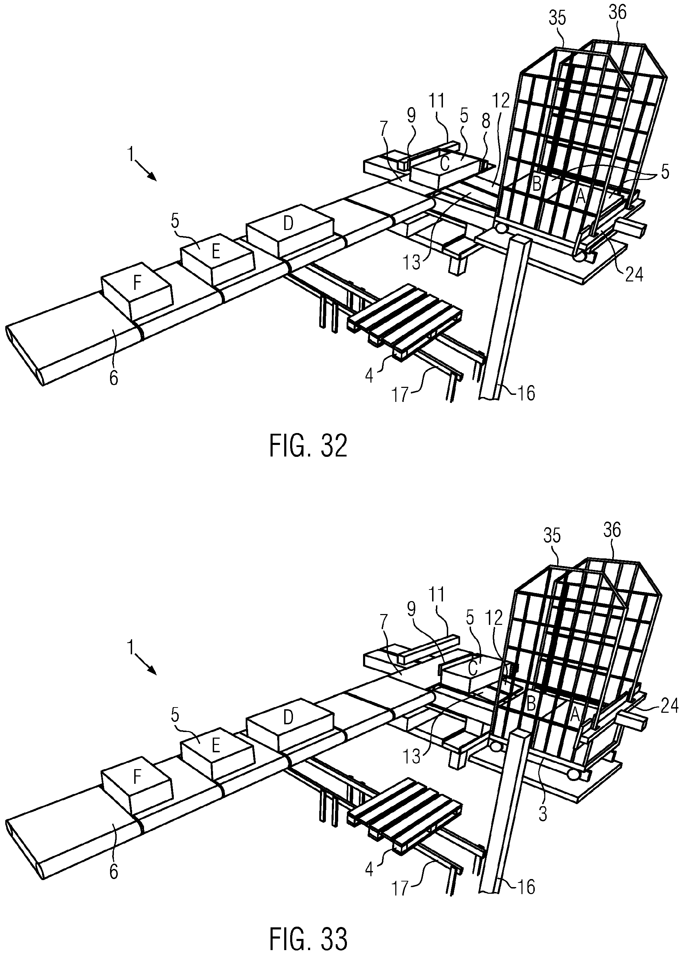

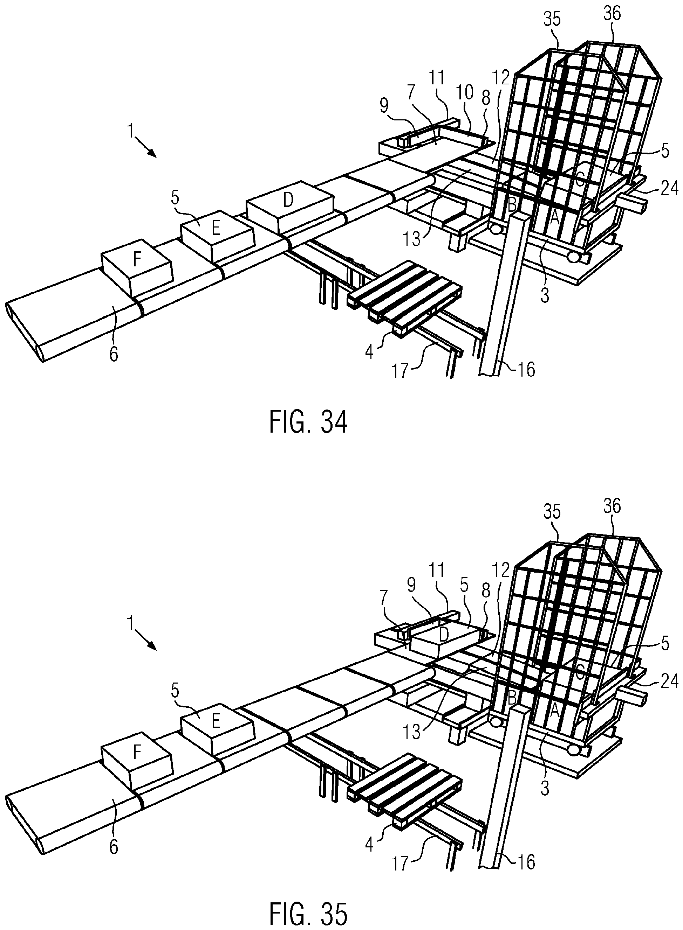

Fig. 32 der Zeichnung zeigt, dass die nächste Ladeeinheit C bereits auf der Schiebeplatte 7 platziert worden ist und dann, wie Fig. 33 der Zeichnung erläutert, mittels des Eckabschiebers 8 auf die beiden Förderbänder 12, 13 bewegt wird und von diesen dann, wie dies anhand von Fig. 34 der Zeichnung ersichtlich ist, an den vorbestimmten Ablageort an der Oberfläche der bereits auf dem Rollcontainer 3 platzierten Ladeeinheit A abgelegt wird. Fig. 33 der Zeichnung zeigt auch, dass der Rollcontainer 3 vom Kombinationsförderlift 16 bereits um eine Stapelebene in Hochachsrichtung Y abgesenkt wurde, bevor die Ladeeinheit C von der automatisierten Vorrichtung zur Beladung des Ladungsträgers in Richtung des zwischen den beiden Seitengittern 35, 36 des Rollcontainers 3 befindlichen Aufnahmeraums befördert wird.

Fig. 34 der Zeichnung zeigt auch, dass der Eckabschieber 8 während der Förderbewegung der Ladeeinheit C auf den Rollcontainer 3 wieder in Längsrichtung X zur Schiebeplatte 7 zurück bewegt worden ist, und zur Aufnahme einer nächsten zu platzierenden Ladeeinheit D bereitsteht, welche dann, auf der Schiebeplatte 7 bereitgestellt wird, wie dies anhand von Fig. 35 der Zeichnung ersichtlich ist.

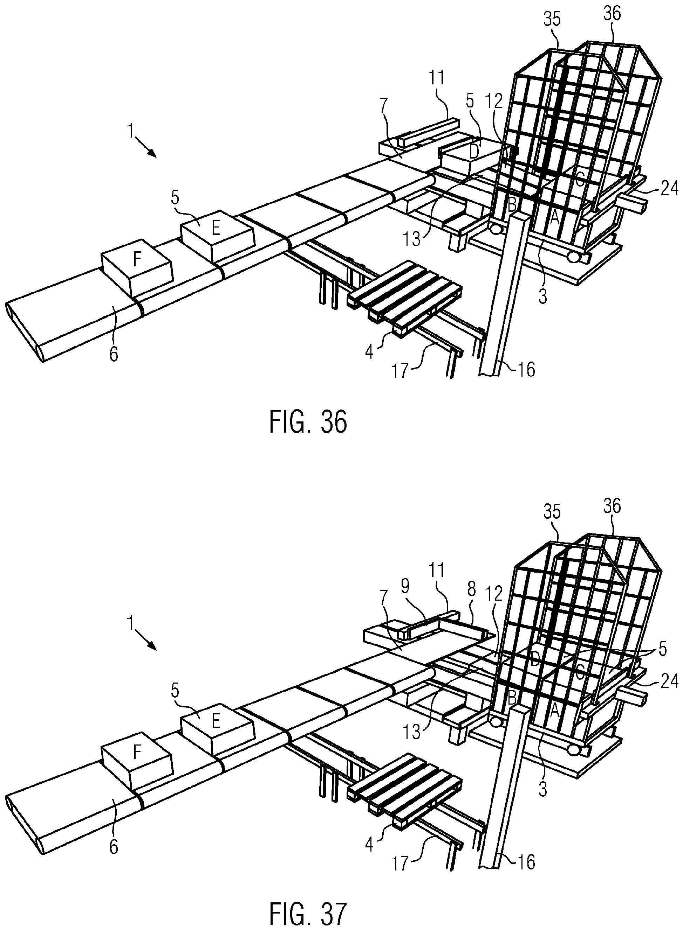

Fig. 36 der Zeichnung zeigt eine Stellung, bei der die Ladeeinheit D vom Eckabschieber 8 bereits auf die beiden Förderbänder 12, 13 bewegt wurde und sich diese in Längsrichtung X in der Ausfahrbewegung befinden, damit die Ladeeinheit D zwischen die beiden Seitengitter 35, 36 befördert werden kann, um von den Förderbändern 12, 13 auf der Oberseite der dort bereits platzierten Ladeeinheit B abgelegt zu werden und auf diese Weise eine Stapelbildung von Ladeeinheiten auf dem Ladungsträger stattfindet, wie dies anhand von Fig. 37 der Zeichnung ersichtlich ist.

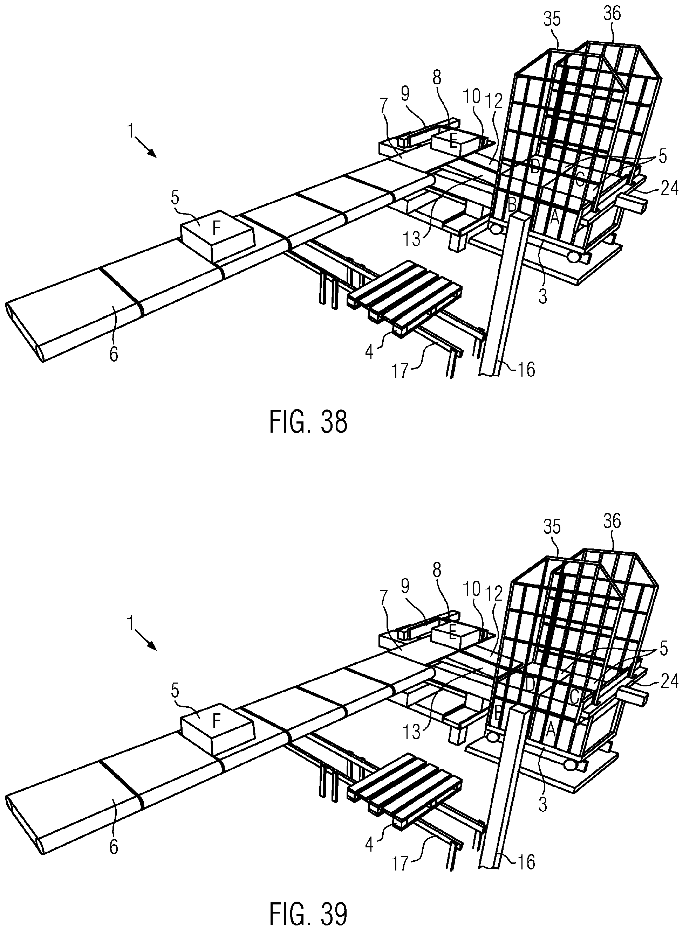

Die Figuren 38 bis 41 der Zeichnung zeigen die automatisierte Beladung des Ladungsträgers mit einer Ladeeinheit E, welche nur die halbe Breite der bisher platzierten Ladeeinheiten A, B, C, D besitzt.

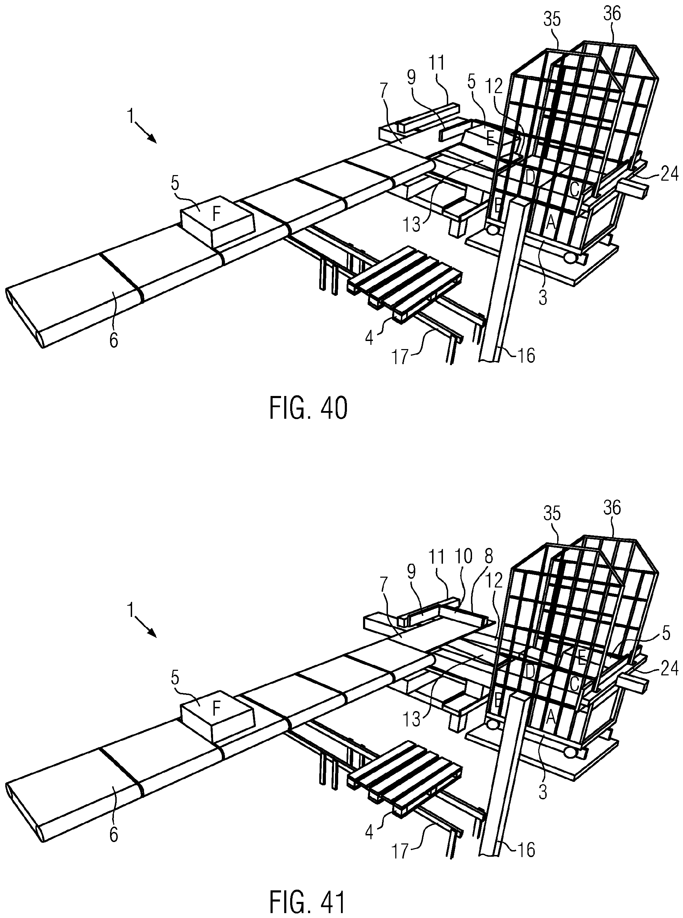

Fig. 38 zeigt, dass die Ladeeinheit E bereits auf der Schiebeplatte 7 bereitgestellt wurde und zwar in Anlage an der Widerlagerfläche 10 des Eckabschiebers 8, welcher dann entsprechend Fig. 39 der Zeichnung die Ladeeinheit E in Richtung des Förderbands 12 befördert, und auf das Förderband 12 schiebt, wie dies anhand von Fig. 40 der Zeichnung ersichtlich ist. Über eine Ausfahrbewegung des Förderbands 12 mit der darauf platzierten Ladeeinheit E und einer Umlaufbewegung des Fördergurts 26 des Förderbands 12 wird die Ladeeinheit E an der Oberseite der bereits platzierten Ladeeinheit C abgelegt, wie dies in Fig. 41 der Zeichnung ersichtlich ist. Die Ladeeinheit E wird dabei bis an die Anlagefläche des Anschlags 25 herangeführt und die beiden Förderbänder 12, 13 werden gemeinsam in Richtung des Seitengitter 36 in Querrichtung Z bewegt, um einen Spaltraum zwischen einer Seitenfläche der Ladeeinheit E und dem Seitengitter 36 zu schließen, sodass exakt übereinander angeordnete Stapellagen an Ladeeinheiten auf dem Rollcontainer 3 ausgebildet werden.

Fig. 41 der Zeichnung zeigt auch, dass während dessen bereits eine nächste Ladeeinheit F in Richtung zur Schiebeplatte 7 beziehungsweise dem daran angeordneten Eckabschieber 8 befördert wird, noch während die Ablage der Ladeeinheit E an der Oberseite der bereits gestapelten Ladeeinheit C stattfindet, sodass der Vorgang der Platzierung der Ladeeinheit E und der Beförderung der Ladeeinheit F auf die Schiebeplatte 7 simultan stattfindet.

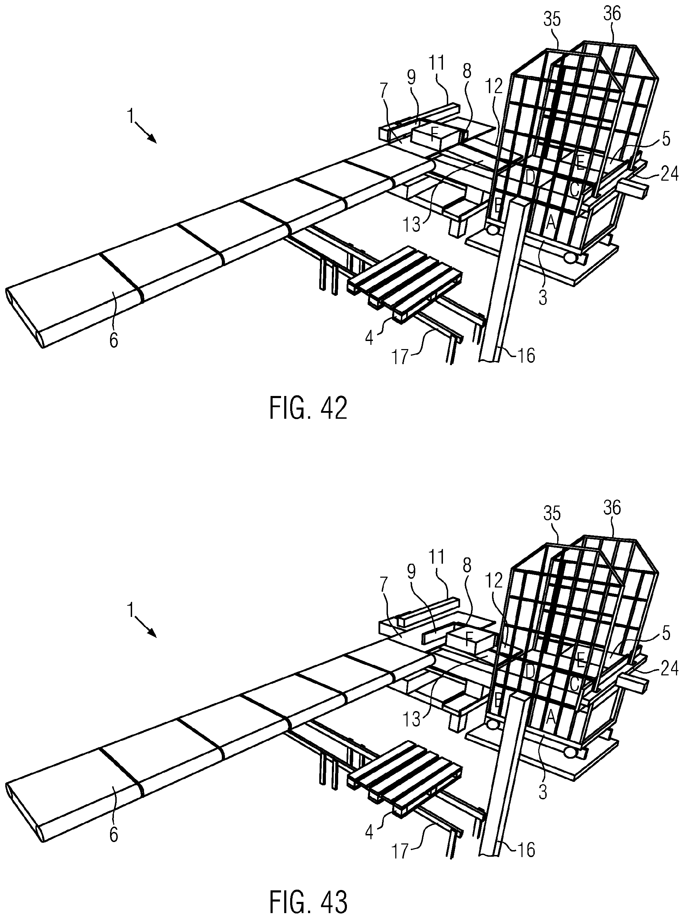

Auch kann, wie dies anhand von Fig. 42 und 43 der Zeichnung ersichtlich ist, die nächste Ladeeinheit F bereits während der Beladung des Ladungsträgers mit der Ladeeinheit E vom Eckabschieber 8 in Richtung zum anderen der beiden Förderbänder 12, 13, also dem Förderband 13 bewegt werden, sodass die Beladung des Ladungsträgers mit zwei Ladeeinheiten über eine unabhängig voneinander durchgeführte Ansteuerung der beiden Förderbänder 12, 13 in unmittelbarer Folge zueinander weitgehend simultan durchgeführt werden kann, wobei eine etwaige Querbewegung der beiden Förderbänder 12, 13 in Querrichtung Z aber immer gemeinsam stattfindet.

Fig. 44 der Zeichnung schließlich zeigt, dass der Eckabschieber 8 die Ladeeinheit F bereits auf das Förderband 13 bewegt hat und dieses dann in Längsrichtung X zur Ablage der Ladeeinheit F auf der Oberseite der bereits abgelegten Ladeeinheit C ausgefahren wird, während sich das Förderband 12 bereits in einer wieder zurückgefahrenen Stellung befindet.

Fig. 45 der Zeichnung zeigt eine schematische Darstellung einer modifizierten Ausführungsform der Vorrichtung nach der vorliegenden Erfindung, bei der die Positionierfördereinrichtung 18 drei Förderbänder 12, 13, 20 besitzt, wobei der Seitenabstand 23 zwischen den Förderbändern unterschiedlich von Förderband zu Förderband sein kann, dieser jeweilige Seitenabstand aber statisch ist, also nicht beispielsweise in Abhängigkeit einer Fördereigenschaft einer Ladeeinheit oder einer anderen Eigenschaft der Ladeeinheit verändert wird.

In der mit der Zusatzbezeichnung 1 bezeichneten Darstellung befindet sich der Eckabschieber 8 an der Schiebeplatte 7 in einer Stellung angeordnet, die zur Übergabe der Ladeeinheit 5 auf das linke Förderband 12 und das mittlere Förderband 13 ausgerichtet ist.

Nach der mit der Zusatzbezeichnung 2 bezeichneten Darstellung wurde die Ladeeinheit 5, welche so breit ist, dass sie auf zwei Förderbändern 12, 13 flächig aufliegt und somit während des gesamten Transportvorgangs von der Schiebeplatte 7 bis zum Rollcontainer 3 von unten her unterstützt wird und somit ein Durchbiegen der Ladeeinheit 5 vermieden wird, vom Eckabschieber 8 bereits auf die beiden Förderbänder abgelegt. Die Ladeeinheit 5 wird von den Förderbändern 12, 13 in Richtung zum Rollcontainer 3 befördert und werden dabei in eine ausgefahrene Stellung verbracht, wie dies anhand der mit der Zusatzbezeichnung 3 bezeichneten Darstellung ersichtlich ist.

Die mit der Zusatzbezeichnung 3 bezeichnete Darstellung zeigt auch, dass die beiden Förderbänder 12, 13 zur Ablage der Ladeeinheit 5 gemeinsam in Richtung zum Ladungsträger 3 ausgefahren werden können, sich dabei der Seitenabstand 23 zwischen den jeweiligen Förderbändern nicht ändert.

Die mit der Zusatzbezeichnung 3 bezeichnete Darstellung zeigt auch, dass während der Beladung des Rollcontainers 3 mit der Ladeeinheit 5 der Eckabschieber 8 bereits wieder auf die Schiebeplatte 7 zurück bewegt wurde und auch eine Lateralbewegung oder Querbewegung durchgeführt hat, sodass eine andere Ladeeinheit, in diesem Fall eine Ladeeinheit mit einer halben Breite zur Positionierung auf dem Förderband 20 bereits auf der Schiebeplatte 8 bereitsteht.

Die mit der Zusatzbezeichnung 4 bezeichnete Darstellung zeigt, dass diese Ladeeinheit von der Schiebeplatte 7 auf das Förderband 20 abgegeben wurde und dann mittels des Förderbands 20 in Richtung zum Rollcontainer 3 transportiert wird.

Die mit der Zusatzbezeichnung 5 bezeichnete Darstellung zeigt, dass noch während der Ablage der kleinen Ladeeinheit mittels des Förderbands 20 auf dem Rollcontainer 3 bereits eine verglichen mit der vom Förderband 20 beförderten kleinen Ladeeinheit doppelt breite Ladeeinheit auf der Schiebeplatte 7 im Erfassungsbereich des und in Anlage am Eckabschieber 8 bereitgestellt wurde, d. h. noch während Ladeeinheiten in Richtung zum Ladungsträger befördert werden, können andere Ladeeinheiten bereits auf der Schiebeplatte 7 bereitgestellt werden und auch während eine Ladeeinheit von einem Förderband, hier beispielsweise durch das Förderband 20, in Richtung zum Ladungsträger befördert wird, auf ein anderes oder andere Förderbänder, hier beispielsweise die Förderbänder 12, 13 bewegt werden, sodass die Beförderung von Ladeeinheiten in Richtung zum Ladungsträger von unterschiedlichen Förderbändern 12, 13, 20 auch zeitgleich durchgeführt werden kann, was zu einer erheblichen Steigerung der Leistung der erfindungsgemäßen Vorrichtung verglichen mit bekannten Vorrichtungen beiträgt.

Die mit den Zusatzbezeichnungen 6, 7, 8 bezeichneten Darstellungen zeigen, dass die Beförderung einer Ladeeinheit 5 in Richtung zum Rollcontainer 3 simultan mit der Bereitstellung einer weiteren Ladeeinheit auf der Schiebeplatte 7 und deren Beförderung in Richtung zum Rollcontainer oder einem anderen Ladungsträger stattfinden kann.

Schließlich zeigen die mit den Zusatzbezeichnungen 9, 10, 11, 12 schematische Darstellungen, welche zeigen, dass mit der erfindungsgemäßen Vorrichtung auch eine Ladeeinheit von dreifacher Breite verglichen mit der in der mit der Zusatzbezeichnung 3 bezeichneten Darstellung auf der Schiebeplatte 7 dargestellten Ladeeinheit befördert werden kann. Die Ausführungsform der erfindungsgemäßen Vorrichtung mit drei Förderbändern 12, 13, 20 besitzt also den Vorteil, dass Ladeeinheiten mit einer Breite, die der Breite eines der Förderbänder 12, 13, 20 entspricht und Ladeeinheiten mit einer Breite, die in Breitenrichtung der Förderbänder betrachtet auf zwei Förderbändern aufliegen, simultan in Richtung zum Ladungsträger transportiert werden können, wodurch die Stundenleistung der erfindungsgemäßen Vorrichtung in Ladeeinheiten pro Stunde verglichen mit der bekannten Vorrichtung wesentlich erhöht werden kann und auch Ladeeinheiten in Richtung zum Ladungsträger befördert werden können, welche in Breitenrichtung der Ladeeinheit betrachtet auf allen drei Förderbändern 12, 13, 20 aufliegen.

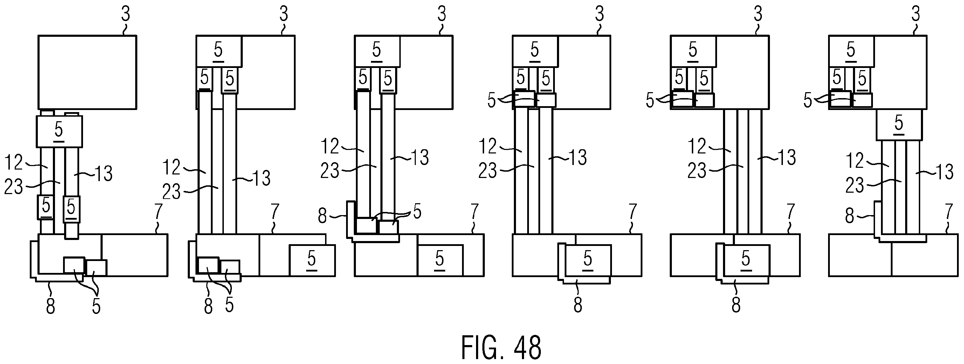

Fig. 48 der Zeichnung zeigt, dass auf zwei Förderbändern auch zwei bis drei verschiedene Ladeeinheiten gleichzeitig hintereinander angeordnet werden können, was zu einer erheblichen Steigerung der Stundenleistung der erfindungsgemäßen Vorrichtung beiträgt, wobei die Förderbänder in X Richtung gemeinsam oder individuell verschoben werden können, während sie in Querrichtung Z immer gleichzeitig bewegt werden. Verglichen mit der bekannten Vorrichtung steigt die Stundenleistung der erfindungsgemäßen Vorrichtung in Ladeeinheiten pro Stunde auch deshalb deutlich an, da eine Veränderung des seitlichen Abstands der Förderbänder zueinander, beispielsweise in Abhängigkeit von einer Eigenschaft der Ladeeinheiten nicht stattfindet und damit eine solche jeweilige Einstellung des Abstands der Förderbänder auch zu einem Zeitvorteil zugunsten der erfindungsgemäßen Vorrichtung führt.

Die erfindungsgemäße Vorrichtung und das erfindungsgemäße Verfahren zeichnen sich nun unter anderem dadurch aus, dass damit auf dem Ladungsträger in der dafür vorbestimmten Reihenfolge unterschiedliche und insbesondere unterschiedlich dimensionierte Ladeeinheiten automatisiert zu Stapeln aus Ladeeinheiten zusammengestellt werden können, wobei die Ladeeinheiten in der Form von unterschiedlich großen Gebinden vorliegen können. So können die Vorrichtung und das Verfahren beispielsweise bei der Kommissionierung von Obst- und Gemüseprodukten oder anderen Frischwaren oder auch anderen Waren eingesetzt werden. Lediglich der Erläuterung halber können solche mit Obst- und Gemüseprodukten befüllten Ladeeinheiten oder Gebinde Grundflächenabmessungen von 600 mal 400 mm oder 300 mal 400 mm besitzen. Da solche Gebinde üblicherweise oben offen ausgebildet sind und darüber hinaus die darin enthaltenen Produkte sehr druckempfindlich sind, sind bekannte automatisierte Palettiervorrichtungen für die gewünschte automatisierte Kommissionierung solcher empfindlicher Produkte ungeeignet.

Die erfindungsgemäße Vorrichtung zeichnet sich auch dadurch aus, dass die Ladeeinheiten oder Gebinde während des gesamten Transportablaufs von der Schiebeplatte bis zur Positionierung der Ladeeinheiten auf dem Ladungsträger immer von unten her unterstützt werden, also die Ladeeinheiten mit deren jeweiliger Grundfläche vollflächig auf der Schiebeplatte aufliegen und auch vollflächig oder nahezu vollflächig auf den Förderbändern der Positionierfördereinrichtung aufliegen und insbesondere nicht die Situation eintritt, dass eine breite Ladeeinheit oder Gebinde nur mit seitlichen Bereichen der Grundfläche auf Förderbändern aufliegt, wie dies bei der bekannten Vorrichtung der Fall ist. Auf diese Weise wird auch die Gefahr verringert, dass ein durch die in der Ladeeinheit dem Gebinde angeordneten Produkte systembedingt feuchte Grundfläche der Ladeeinheit dazu neigt durchzubiegen oder durchzubrechen. Im Gegensatz zu der bekannten Vorrichtung müssen die jeweils zu handhabenden Ladeeinheiten bei der erfindungsgemäßen Vorrichtung auch nicht zunächst mittels einer mit Förderbändern versehenen Justiereinheit relativ zur Positionierfördereinrichtung ausgerichtet werden, wodurch ein wesentlicher Zeitvorteil bei der Handhabung der Ladeeinheiten entsteht und damit die Stundenleistung der erfindungsgemäßen Vorrichtung erheblich ansteigt.

Bei der erfindungsgemäßen Vorrichtung und dem erfindungsgemäßen Verfahren findet darüber hinaus nur ein jeweiliger Bandübergang statt, nämlich bei der Übergabe der Ladeeinheit von der Schiebeplatte auf das Förderband oder die Förderbänder der Positionierfördereinrichtung. Bei einem solchen Bandübergang besteht insbesondere bei einem verschmutzten Förderband die Gefahr einer Verdrehung der Ladeeinheit relativ zum Förderband oder den Förderbändern. Auch dieses Problem ist durch die erfindungsgemäße Vorrichtung und das erfindungsgemäße Verfahren beseitigt worden, da die jeweilige Ladeeinheit bei diesem Bandübergang bis zur vollständigen Positionierung der Ladeeinheit auf dem Förderband oder den Förderbändern von dem Querschieber relativ zum Förderband oder den Förderbändern ausgerichtet gehalten wird, sodass eine Positionierung der Ladeeinheit auf dem Förderband oder den Förderbändern in einer relativ zur Längsrichtung des jeweiligen Förderbands verdrehten oder gedrehten Lage vermieden wird.

Hinsichtlich vorstehend im Einzelnen nicht näher erläuterter Merkmale der Erfindung wird im Übrigen ausdrücklich auf die Patentansprüche und die Zeichnung verwiesen.

### Bezugszeichenliste

1. Vorrichtung
2. Ladungsträger
3. Rollcontainer
4. Europalette
5. Ladeeinheit
6. Zuführeinrichtung
7. Schiebeplatte
8. Schieber, Eckabschieber
9. Schiebefläche
10. Widerlagerfläche
11. Antrieb
12. Förderband
13. Förderband
14. Steuervorrichtung
15. Fördermittel
16. Kombinationsförderlift
17. Kombinationsförderer
18. Positionierfördereinrichtung
19. Übergabeförderer
20. Förderband
21. Linealfördereinheit
22. Lineareinheit, Linearfördereinheit,
23. Seitenabstand
24. Anschlag
25. Seitenanschlag
26. Gurt
27. Gurt
28. Endbereiche
29. Oberfläche
30. Stirnseite
31. Oberfläche
32. Anlagefläche
33. Hubplattform
34. Aufnahmefläche
35. Seitengitter
36. Seitengitter
37. Einrichtung
38. Aufnahme
39. Aufnahme
40. Längsmittelachse
41. Ablageendbereich
42. Keilförmige Konfiguration

## Patentansprüche

1. Vorrichtung (1), welche zur automatisierten Beladung eines Ladungsträgers (2) mit einen Ladestapel bildenden Ladeeinheiten (5) eingerichtet ist, wobei die Vorrichtung (1) ein Fördermittel (17) aufweist, welches dazu eingerichtet ist, den Ladungsträger (2) in mindestens eine ebene Richtung (X Richtung) und eine Hochachsrichtung (Y Richtung) zu befördern und die Vorrichtung eine Positionierfördereinrichtung (18) mit mindestens zwei Förderbändern (12, 13, 20) aufweist, die dazu eingerichtet sind, die Ladeeinheit (5) in Richtung zum Ladungsträger (2) zu befördern, wobei die Förderbänder (12, 13, 20) zur Verfahrbewegung relativ zum Ladungsträger (2) in Längsrichtung (X Richtung) und in Querrichtung (Z Richtung) eingerichtet sind und die Vorrichtung einen Übergabeförderer (19) aufweist, welcher zur Beförderung der Ladeeinheit auf die Positionierfördereinrichtung (18) eingerichtet ist, **dadurch gekennzeichnet, dass** die Positionierfördereinrichtung (18) einen unabhängig von der Ladeeinheit (5) vorgesehenen festen Seitenabstand (23) zwischen den Förderbändern (12, 13, 20) zueinander aufweist und der Übergabeförderer (19) eine die Ladeeinheit (5) aufnehmende Schiebeplatte(7) und einen Schieber (8) aufweist, welcher zur Beförderung der Ladeeinheit (5) auf der Schiebeplatte (7) in Richtung zu den Förderbändern (12, 13, 20) der Positionierfördereinrichtung (18) vorgesehen ist.

2. Vorrichtung nach Anspruch 1, **dadurch gekennzeichnet, dass** der Schieber (8) als Eckabschieber mit einer Widerlagerfläche (10) und einer Schiebefläche (9) ausgebildet ist und zur Positionierung relativ zur Schiebeplatte (7) in Abhängigkeit der auf dem Ladungsträger (2) vorbestimmbaren Position der Ladeeinheit (5) ausgebildet ist.

3. Vorrichtung nach Anspruch 1 oder 2, **dadurch gekennzeichnet, dass** der Schieber (8) und die Förderbänder (12, 13, 20) in Abhängigkeit der auf dem Ladungsträger (2) vorbestimmten Position der Ladeeinheit (5) unabhängig voneinander in Querrichtung zur Förderrichtung der Förderbänder (12, 13, 20) positionierbar sind.

4. Vorrichtung nach einem der vorstehenden Ansprüche, **dadurch gekennzeichnet, dass** die Förderbänder (12, 13, 20) in Förderrichtung zum Ladungsträger (2) unabhängig voreinander ansteuerbar ausgebildet sind.

5. Vorrichtung nach einem der vorstehenden Ansprüche, **dadurch gekennzeichnet, dass** die Förderbänder (12, 13, 20) in Richtung zum Ladungsträger (2) unabhängig voneinander ausfahrbar ausgebildet sind und dabei in Querrichtung relativ zueinander einen stets gleichbleibenden Abstand (23) zueinander aufweisen.

6. Vorrichtung nach einem der vorstehenden Ansprüche, **gekennzeichnet durch** eine Einrichtung (37) zur Aufnahme jeweiliger seitlicher Anlageflächen (35, 36) eines als Rollcontainer (3) ausgebildeten Ladungsträgers (2), wobei die Einrichtung (37) zur weitgehend parallel zueinander vorgesehenen Ausrichtung der Anlageflächen (35, 36) ausgebildet ist.

7. Vorrichtung nach Anspruch 6, **dadurch gekennzeichnet, dass** die Einrichtung (37) keilflächenförmig ausgebildet ist und eine einer jeweiligen Anlagefläche (35, 36) zugeordnete Kontaktfläche aufweist, welche in einer Draufsichtansicht von oben eine sich in Förderrichtung zum Ladungsträger (2) erweiternde Konfiguration aufweist oder die Einrichtung eine einer jeweiligen Anlagefläche zugeordnete drehbar angeordnete Rolle aufweist, deren Außenumfangsfläche in einer Ansicht von oben auf einen Querschnitt durch die Rolle keilförmig ausgebildet ist.

8. Vorrichtung nach einem der vorstehenden Ansprüche, **dadurch gekennzeichnet, dass** die Förderbänder (12, 13, 20) jeweils ein Lasttrum und ein Leertrum aufweisen und eine sich in Richtung zum Ladungsträger in Hochachsrichtung verjüngende Konfiguration (42) zwischen dem Lasttrum und dem Leertrum aufweisen.

9. Vorrichtung nach einem der vorstehenden Ansprüche, **dadurch gekennzeichnet, dass** der Schieber (8) zur Bewegung in Richtung zu den Förderbändern (12, 13, 20) mit einer der Fördergeschwindigkeit der Förderbänder entsprechenden Geschwindigkeit ausgebildet ist.

10. Vorrichtung nach einem der vorstehenden Ansprüche, **dadurch gekennzeichnet, dass** die Förderbänder (12, 13, 20) zu einer gemeinsamen Verlagerungsbewegung in Richtung quer zur Förderrichtung der Förderbänder (12, 13, 20) ausgebildet sind.

11. Vorrichtung nach einem der vorstehenden Ansprüche, **dadurch gekennzeichnet, dass** die Positionierfördereinrichtung (18) drei Förderbänder (12, 13, 20) aufweist, welche unabhängig voneinander betreibbar sind und quer zur Förderrichtung zusammen verlagerbar sind

12. Vorrichtung nach einem der vorstehenden Ansprüche, **gekennzeichnet durch** eine Steuervorrichtung (14), die
- zur Betätigung des Schiebers (8) mittels eines Antriebs (11) in Richtung zu den Förderbändern (12, 13, 20) mit einer der Fördergeschwindigkeit der Förderbänder (12, 13, 20) in Förderrichtung zum Ladungsträger (2) entsprechenden Translationsgeschwindigkeit ausgebildet ist
und/oder
- zur Betätigung eines Förderbands (12, 13, 20) mittels eines Antriebs in Richtung quer zur Förderrichtung des Förderbands (12, 13, 20) unter Beibehaltung eines festen Seitenabstand zwischen den Förderbändern (12, 13, 20) zueinander aufweist.

13. Verfahren zur automatisierten Beladung eines Ladungsträgers (2) mit einen Ladestapel bildenden Ladeeinheiten (5), bei dem ein Ladungsträger (2) in mindestens eine ebene Richtung (X Richtung) und eine Hochachsrichtung (Y Richtung) dazu befördert wird und mittels einer Positionierfördereinrichtung (18) mit mindestens zwei Förderbändern (12, 13, 20) die Ladeeinheit (5) in Richtung zum Ladungsträger (2) befördert wird, wobei die Förderbänder (12, 13, 20) relativ zum Ladungsträger (2) in Längsrichtung (X Richtung) und in Querrichtung (Z Richtung) verfahrbar sind und die Ladeeinheit (5) mittels eines Übergabeförderers (19) auf die Positionierfördereinrichtung (18) befördert wird, **dadurch gekennzeichnet, dass** die Ladeeinheit (5) mittels eines Schiebers (8) von einer Schiebeplatte (7) auf die Förderbänder (12, 13, 20) der Positionierfördereinrichtung (18) befördert wird und die Förderbänder (12, 13, 20) während einer Bewegung in Längsrichtung (X Richtung) und in Querrichtung (Z Richtung) einen vorgesehenen festen Abstand (23) zwischen den Förderbändern (12, 13, 20) zueinander aufweisen.

14. Verfahren nach Anspruch 13, **dadurch gekennzeichnet, dass** zur Verringerung eines Abstands zwischen auf dem Ladungsträger (2) angeordneten Ladeeinheiten (5) vor oder nach dem Erreichen einer vorbestimmten Position der Ladeeinheit (5) in Längsrichtung relativ zum Ladungsträger (2) eine Querbewegung der Förderbänder (12, 13, 20) vor der Abgabe der Ladeeinheit auf den Ladungsträger (2) oder einer anderen Ladeeinheit (5) durchgeführt wird, wobei bei der Querbewegung die Förderbänder (12, 13, 20) als einheitliche Baueinheit quer bewegt werden.

15. Verfahren nach Anspruch 13 oder 14, **dadurch gekennzeichnet, dass** die Förderbänder (12, 13, 20) vor der Ablage der Ladeeinheit (5) entgegen der Förderrichtung der Förderbänder (12, 13, 20) mit einer Rückzugsgeschwindigkeit zurückgezogen werden, welche geringer ist als die Fördergeschwindigkeit der Gurte (26, 27) der Förderbänder (12, 13, 20) und die Förderbänder (12, 13, 20) weitgehend zeitgleich mit der Rückzugsbewegung in Querrichtung verlagert werden.

16. Verfahren nach einem der Ansprüche 13 bis 15, **dadurch gekennzeichnet, dass** seitliche Anschlagflächen (35, 36) eines Ladungsträgers (2) weitgehend parallel zueinander ausgerichtet werden, indem mit mit den Anschlagflächen (35, 36) in Kontakt befindliche Keilflächen und/oder Rollen der lichte Abstand zwischen den Anschlagflächen (35, 36) verändert wird.

## Claims

1. Device (1), which is configured for the automated loading of a load carrier (2) with loading units (5) forming a load stack, wherein the device (1) has a conveyor (17), which is configured to convey the load carrier (2) in at least one planar direction (X direction) and one vertical axis direction (Y direction), and the device has a positioning conveyor (18) with at least two conveyor belts (12, 13, 20), which are configured to convey the loading unit (5) in the direction of the load carrier (2), wherein the conveyor belts (12, 13, 20) are configured for displacement movement relative to the load carrier (2) in the longitudinal direction (X direction) and in the transverse direction (Z direction), and the device has a transfer conveyor (19) which is configured to convey the loading unit (5) onto the positioning conveyor (18), **characterised in that** the positioning conveyor (18) has a fixed relative lateral spacing (23) provided between the conveyor belts (12, 13, 20) independently of the loading unit (5) and the transfer conveyor (19) has a push plate (7) that receives the loading unit (5) and a pusher (8) which is provided for conveying the loading unit (5) on the push plate (7) in the direction of the conveyor belts (12, 13, 20) of the positioning conveyor (18).

2. Device according to claim 1, **characterised in that** the pusher (8) is designed as a corner turn pusher with an abutment surface (10) and a pushing surface (9) and is designed for positioning relative to the push plate (7) depending on the position of the loading unit (5), which position can be predetermined on the load carrier (2).

3. Device according to claim 1 or 2, **characterised in that** the pusher (8) and the conveyor belts (12, 13, 20) can be positioned independently of one another in the direction transverse to the conveying direction of the conveyor belts (12, 13, 20) depending on the predetermined position of the loading unit (5) on the load carrier (2).

4. Device according to one of the preceding claims, **characterised in that** the conveyor belts (12, 13, 20) can be controlled independently of one another in the conveying direction towards the load carrier (2).

5. Device according to one of the preceding claims, **characterised in that** the conveyor belts (12, 13, 20) can be extended independently of one another in the direction of the load carrier (2) and in the process always have a constant relative spacing (23) from one another in the transverse direction.

6. Device according to one of the preceding claims, **characterised by** an apparatus (37) for receiving respective lateral bearing surfaces (35, 36) of a load carrier (2) in the form of a roll container (3), wherein the apparatus (37) is designed to align the bearing surfaces (35, 36) largely parallel to one another.

7. Device according to claim 6, **characterised in that** the apparatus (37) is in the form of a wedge surface and has a contact surface which is associated with a respective bearing surface (35, 36) and which, in a plan view from above, has a configuration that widens in the conveying direction towards the load carrier (2), or the apparatus has a rotatably arranged roller associated with a respective bearing surface, the outer circumferential surface of which roller is wedge-shaped when viewed from above onto a cross-section through the roller.

8. Device according to one of the preceding claims, **characterised in that** the conveyor belts (12, 13, 20) each have a tight side and a slack side and have a configuration (42) between the tight side and the slack side that tapers in the direction of the load carrier in the vertical axis direction.

9. Device according to one of the preceding claims, **characterised in that** the pusher (8) is designed to move in the direction of the conveyor belts (12, 13, 20) at a speed corresponding to the conveying speed of the conveyor belts.

10. Device according to one of the preceding claims, **characterised in that** the conveyor belts (12, 13, 20) are designed to be jointly displaced in the direction transverse to the conveying direction of the conveyor belts (12, 13, 20).

11. Device according to one of the preceding claims, **characterised in that** the positioning conveyor (18) has three conveyor belts (12, 13, 20) which can be operated independently of each other and can be displaced together transversely to the conveying direction

12. Device according to one of the preceding claims, **characterised by** a control device (14), which
- is designed to actuate the pusher (8) by means of a drive (11) in the direction of the conveyor belts (12, 13, 20) at a translation speed corresponding to the conveying speed of the conveyor belts (12, 13, 20) in the conveying direction towards the load carrier (2)
and/or
- has to actuate a conveyor belt (12, 13, 20) by means of a drive in the direction transverse to the conveying direction of the conveyor belt (12, 13, 20) while maintaining a fixed relative lateral spacing between the conveyor belts (12, 13, 20).

13. Method for the automated loading of a load carrier (2) with loading units (5) forming a load stack, in which a load carrier (2) is conveyed in at least one planar direction (X direction) and one vertical axis direction (Y direction) thereto and the loading unit (5) is conveyed in the direction of the load carrier (2) by means of a positioning conveyor (18) with at least two conveyor belts (12, 13, 20), wherein the conveyor belts (12, 13, 20) can be displaced relative to the load carrier (2) in the longitudinal direction (X direction) and in the transverse direction (Z direction), and the loading unit (5) is conveyed onto the positioning conveyor (18) by means of a transfer conveyor (19), **characterised in that** the loading unit (5) is conveyed by means of a pusher (8) from a push plate (7) onto the conveyor belts (12, 13, 20) of the positioning conveyor (18) and during a movement in the longitudinal direction (X direction) and in the transverse direction (Z direction), the conveyor belts (12, 13, 20) have a fixed relative spacing (23) provided between the conveyor belts (12, 13, 20).

14. Method according to claim 13, **characterised in that** in order to reduce a spacing between loading units (5) arranged on the load carrier (2), before or after the loading unit (5) reaches a predetermined position, a transverse movement of the conveyor belts (12, 13, 20) is carried out in the longitudinal direction relative to the load carrier (2), before the loading unit is discharged onto the load carrier (2) or another loading unit (5), wherein the conveyor belts (12, 13, 20) are moved transversely as a single unit during the transverse movement.

15. Method according to claim 13 or 14, **characterised in that** before the loading unit is discharged, the conveyor belts (12, 13, 20) are retracted counter to the conveying direction of the conveyor belts (12, 13, 20) at a retraction speed which is lower than the conveying speed of the straps (26, 27) of the conveyor belts (12, 13, 20) and the conveyor belts (12, 13, 20) are displaced in the transverse direction largely simultaneously with the retraction movement.

16. Method according to one of claims 13 to 15, **characterised in that** lateral stop surfaces (35, 36) of a load carrier (2) are aligned largely parallel to one another by changing the clear spacing between the stop surfaces (35, 36) using wedge surfaces and/or rollers in contact with the stop surfaces (35, 36).

## Revendications

1. Dispositif (1) conçu pour charger de façon automatisée un support de charge (2) avec des unités de chargement (5) formant une pile de chargement, ledit dispositif (1) présentant un convoyeur (17) conçu pour transporter le support de charge (2) dans au moins une direction horizontale (direction X) et une direction verticale (direction Y), et ledit dispositif présentant un transporteur de positionnement (18) doté d'au moins deux bandes transporteuses (12, 13, 20) conçues pour transporter l'unité de chargement (5) en direction du support de charge (2), lesdites bandes transporteuses (12, 13, 20) étant conçues pour se déplacer par rapport au support de charge (2) dans la direction longitudinale (direction X) et dans la direction transversale (direction Z) et ledit dispositif présentant un convoyeur de transfert (19) qui est conçu pour faire passer l'unité de chargement sur le transporteur de positionnement (18) ; **caractérisé en ce que** le transporteur de positionnement (18) présente un écart latéral fixe (23) entre les bandes transporteuses (12, 13, 20) les unes par rapport aux autres indépendamment de l'unité de chargement (5), et le convoyeur de transfert (19) présente une plaque coulissante(7) recevant l'unité de chargement (5) ainsi qu'un coulisseau (8) prévu faire passer l'unité de chargement (5) présente sur la plaque coulissante (7) en direction des bandes transporteuses (12, 13, 20) du convoyeur de positionnement (18).

2. Dispositif selon la revendication 1, **caractérisé en ce que** le coulisseau (8) est réalisé à la manière d'un coulisseau d'angle présentant une surface de butée (10) et une surface de glissement (9) et peut être positionné par rapport à la plaque coulissante (7) en fonction de la position de l'unité de chargement (5) qui peut être prédéterminée du fait du support de charge (2).

3. Dispositif selon la revendication 1 ou 2, **caractérisé en ce que** le coulisseau (8) et les bandes transporteuses (12, 13, 20) peuvent être positionnés indépendamment les uns des autres dans le sens transversal au sens de transport des bandes transporteuses (12, 13, 20) en fonction de la position prédéterminée de l'unité de chargement (5) du fait du support de charge (2).

4. Dispositif selon l'une des revendications précédentes, **caractérisé en ce que** les bandes transporteuses (12, 13, 20) sont réalisées de manière à pouvoir être commandées indépendamment les unes des autres dans le sens du transport vers le support de charge (2).

5. Dispositif selon l'une des revendications précédentes, **caractérisé en ce que** les bandes transporteuses (12, 13, 20) sont conçues pour être déployables indépendamment les unes des autres en direction du support de charge (2) en présentant continuellement un écart (23) constant entre elles dans le sens transversal les unes par rapport aux autres.

6. Dispositif selon l'une des revendications précédentes, **caractérisé par** un dispositif (37) de réception de surfaces de contact latérales (35, 36) d'un support de charge (2) réalisé à la manière d'un conteneur à galets (3), ledit dispositif (37) étant réalisé pour effectuer un alignement sensiblement parallèle des surfaces de contact (35, 36) l'une par rapport à l'autre.

7. Dispositif selon la revendication 6, **caractérisé en ce que** le dispositif (37) est réalisé sous la forme d'une surface en coin et présente une surface de contact associée à une surface de butée (35, 36) respective et qui, vue du dessus, présente une configuration qui s'élargit dans le sens du transport vers le support de charge (2), ou bien le dispositif présente un galet rotatif associé à une surface de butée respective et dont la surface périphérique extérieure, selon une vue de dessus de la section transversale du galet, est en forme de coin.

8. Dispositif selon l'une des revendications précédentes, **caractérisé en ce que** les bandes transporteuses (12, 13, 20) comportent chacune un brin de charge et un brin mou et présentent une configuration (42) qui s'effile, dans la direction verticale, vers le support de charge, entre le brin de charge et le brin mou.

9. Dispositif selon l'une des revendications précédentes, **caractérisé en ce que** le coulisseau (8) est réalisé pour se déplacer vers les bandes transporteuses (12, 13, 20) à une vitesse correspondant à la vitesse de transport des bandes transporteuses.

10. Dispositif selon l'une des revendications précédentes, **caractérisé en ce que** les bandes transporteuses (12, 13, 20) sont réalisées pour effectuer un déplacement commun dans une direction transversale au sens de transport des bandes transporteuses (12, 13, 20).

11. Dispositif selon l'une des revendications précédentes, **caractérisé en ce que** le transporteur de positionnement (18) présente trois bandes transporteuses (12, 13, 20) activables indépendamment les unes des autres et déplaçables conjointement transversalement au sens du transport

12. Dispositif selon l'une des revendications précédentes, **caractérisé par** un dispositif de commande (14), qui
- est réalisé pour actionner le coulisseau (8) au moyen d'un entraînement (11) en direction des bandes transporteuses (12, 13, 20) avec une vitesse de translation correspondant à la vitesse de transport des bandes transporteuses (12, 13, 20) dans le sens du transport vers le support de charge (2),
et/ou
- présente pour actionner une bande transporteuse (12, 13, 20) au moyen d'un entraînement dans la direction transversale au sens de transport de la bande transporteuse (12, 13, 20) tout en maintenant un écart latéral fixe entre les bandes transporteuses (12, 13, 20) les unes par rapport aux autres.

13. Procédé de chargement automatisé d'un support de charge (2) avec des unités de chargement (5) formant une pile de chargement, dans lequel un support de charge (2) est transporté dans au moins une direction horizontale (direction X) et une direction verticale (direction Y) par rapport à celle-ci et, au moyen d'un transporteur de positionnement (18) doté d'au moins deux bandes transporteuses (12, 13, 20), l'unité de chargement (5) est transportée en direction du support de charge (2), lesdites bandes transporteuses (12, 13, 20) étant déplaçables par rapport au support de charge (2) dans la direction longitudinale (direction X) et dans la direction transversale (direction Z) et ladite unité de chargement (5) passant sur le transporteur de positionnement (18) au moyen d'un convoyeur de transfert (19) ; **caractérisé en ce que** l'unité de chargement (5) passe, sous l'action d'un coulisseau (8), d'une plaque coulissante (7) vers les bandes transporteuses (12, 13, 20) du transporteur de positionnement (18) et les bandes transporteuses (12, 13, 20) présentent un écart prévu fixe (23) entre les bandes transporteuses (12, 13, 20) lors d'un mouvement dans la direction longitudinale (direction X) et dans la direction transversale (direction Z) les unes par rapport aux autres.

14. Procédé selon la revendication 13, **caractérisé en ce que**, pour réduire l'écart entre les unités de chargement (5) disposées sur le support de charge (2) avant ou après qu'une position prédéterminée de l'unité de chargement (5) a été atteinte dans la direction longitudinale par rapport au support de charge (2), il est réalisé un mouvement transversal des bandes transporteuses (12, 13, 20) avant que l'unité de chargement ne soit déposée sur le support de charge (2) ou sur une autre unité de chargement (5), les bandes transporteuses (12, 13, 20) subissant ledit déplacement transversal sous la forme d'une même unité structurelle lors du déplacement transversal.

15. Procédé selon la revendication 13 ou 14, **caractérisé en ce que** les bandes transporteuses (12, 13, 20) subissent, avant le dépôt de l'unité de chargement (5), une rétraction dans le sens inverse au sens du transport desdites bandes transporteuses (12, 13, 20) à une vitesse de rétraction qui est inférieure à la vitesse de transport des courroies (26, 27) desdites bandes transporteuses (12, 13, 20), et lesdites bandes transporteuses (12, 13, 20) sont déplacées dans la direction transversale sensiblement simultanément au mouvement de rétraction.

16. Procédé selon l'une des revendications 13 à 15, **caractérisé en ce que** des surfaces de butée (35, 36) latérales d'un support de charge (2) subissent un alignement sensiblement parallèle les unes par rapport aux autres par modification de l'écartement existant entre lesdites surfaces de butée (35, 36) à l'aide de surfaces en coin et/ou de galets se trouvant en contact avec lesdites surfaces de butée (35, 36).
